# EUROPEAN PATENT SPECIFICATION

(11) **EP 3 467 403 B1**
(45) Date of publication and mention of the grant of the patent: **08.11.2023**
(21) Application number: 17802520.1
(22) Date of filing: 25.04.2017
(51) Int. Cl.: F25B 21/00

(54) **THERMOMAGNETIC CYCLE DEVICE**
THERMOMAGNETISCHE KREISLAUFVORRICHTUNG
DISPOSITIF À CYCLE THERMOMAGNÉTIQUE

(30) Priority: 24.05.2016 JP 2016103652; 02.12.2016 JP 2016235322; 13.04.2017 JP 2017079882
(43) Date of publication of application: 10.04.2019
(73) Proprietor: DENSO CORPORATION, Aichi-pref., 448-8661 (JP)
(72) Inventor: NIIYAMA Yasunori, Kariya-city Aichi 448-8661 (JP); IWAYA Kazuki, Kariya-city Aichi 448-8661 (JP); TORII Akito, Kariya-city Aichi 448-8661 (JP); NOMURA Tomoyuki, Kariya-city Aichi 448-8661 (JP); ITOU Shunji, Kariya-city Aichi 448-8661 (JP)
(74) Representative: Vigand, Philippe
(86) International application number: PCT/JP2017/016323
(87) International publication number: WO 2017/203922

(56) References cited:
- JP-A- 2006 056 274
- JP-A- 2006 283 987
- JP-A- 2010 025 435
- JP-A- 2012 047 385
- JP-A- 2012 047 385
- JP-A- 2014 062 682
- US-A1- 2012 266 591
- US-A1- 2014 305 138
- US-A1- 2014 311 165
- US-A1- 2015 096 307

## Description

This application is based on Japanese Patent Application No. 2016-103652 filed on May 24, 2016, Japanese Patent Application No. 2016-235322 filed on December 2, 2016, and Japanese Patent Application No. 2017-79882 filed on April 13, 2017.

### TECHNICAL FIELD

The present disclosure relates to a thermomagnetic cycle device using temperature characteristics of a magnetic substance.

### BACKGROUND ART

Patent documents 1 to 5 disclose thermomagnetic cycle devices, in each of which kinetic energy and thermal energy are mutually converted using temperature characteristics of a magnetic substance. As one thermomagnetic cycle device, a magneto-caloric effect type heat pump device (henceforth MHP device) is described. The MHP device uses change in the intensity of a magnetic field and a both-way flow of medium which transfers heat.

The phase relation between the change in magnetic field and the both-way flow is an important element in order to realize a desirable operational status as a thermomagnetic cycle device. In order to realize a desirable phase relation, a phase conversion mechanism that controls a rotation phase is provided between a magnetic field modulation device and a heat transport device.

### PRIOR ART LITERATURES

### PATENT LITERATURE

Patent Literature 1 : JP 2012-237545 A
Patent Literature 2 : JP 2012-47385 A
Patent Literature 3 : JP 2012-229634 A
Patent Literature 4 : JP 2012-229831 A
Patent Literature 5 : JP 2014-62682 A
Document US2012266591A1 discloses a thermo-magnetic engine apparatus and reversible thermo-magnetic cycle apparatus. Document JP2012047385A discloses a magnetic refrigerating device.

### SUMMARY OF INVENTION

The invention is defined in the appended independent claims.

In the conventional technology, a desirable phase may not be realized in some cases. For example, if air bubbles mix in liquid used as a heat transport medium, the heat transport medium takes on compressibility. If the quantity of air bubbles changes, the compressibility of the heat transport medium changes. The change in the compressibility produces an error in a phase represented by an actual flow of the heat transport medium, compared with a phase assumed from the mechanical configuration.

In another viewpoint, a reaction of magneto-caloric effect in a magneto-caloric element may be delayed to a change in a magnetic field. In this case, the flow and the heat absorption/generation may shift from a desirable state. For example, even if a magneto-caloric element generates heat, the heat is not fully carried by a heat transport medium. Furthermore, the delay in reaction may change due to factors such as outside temperature, a kind of the heat transport medium, and degradation in components.

In another viewpoint, it is difficult to adjust a phase difference with easy realizable structure. When a phase conversion mechanism is provided in a rotation shaft, a device for permitting own rotation is needed for the mechanism. For example, a fluid circuit is necessary over a rotatable part and a non-rotatable part.

In the above-described viewpoints and the other viewpoints not mentioned, a further improvement is required for a thermomagnetic cycle device.

It is an object of the present disclosure to provide a thermomagnetic cycle device in which influence caused by phase change in a both-way flow is restricted.

It is another object of the present disclosure to provide a thermomagnetic cycle device in which influence caused by a reaction delay in a magneto-caloric effect of a magneto-caloric element is restricted.

It is another object of the present disclosure to provide a thermomagnetic cycle device which can maintain the functions, while there is change in a flow phase or a reaction phase.

It is another object of the present disclosure to provide a thermomagnetic cycle device equipped with a phase controller having easy structure.

According to an aspect of the present disclosure, a thermomagnetic cycle device includes: a magneto-caloric element that emits or absorbs heat depending on an intensity of an external magnetic field; a magnetic field modulation device that modulates the external magnetic field applied to the magneto-caloric element; a heat transport device that generates a both-way flow of heat transport medium that exchanges heat with the magneto-caloric element so that a high temperature end and a low temperature end are generated in the magneto-caloric element; a phase controller that adjusts a phase difference between a magnetic field phase representing change in the external magnetic field generated by the magnetic field modulation device and a flow phase of the both-way flow generated by the heat transport device; and a control device that controls the phase controller. The control device includes: a phase acquisition part that acquires the flow phase of the both-way flow of the heat transport medium or a reaction phase representing change in the heat emitted or absorbed by the magneto-caloric element, and a control part that controls the phase controller based on the flow phase or the reaction phase.

According to the thermomagnetic cycle device, the advantageous action and effect described below is acquired. The phase acquisition part acquires the flow phase of the both-way flow of the heat transport medium or the reaction phase representing change in the heat generated or absorbed by the magneto-caloric element. The control part controls the phase controller based on the flow phase or the reaction phase. For this reason, when the flow phase is acquired, a desirable phase difference can be realized even while the flow phase of the both-way flow is deviated from a planned phase. When the reaction phase is acquired, a desirable phase difference can be realized even while the reaction phase is deviated from a planned phase. When both the flow phase and the reaction phase are acquired, a desirable phase difference can be realized even while the flow phase or the reaction phase is deviated from a planned phase.

According to an aspect of the present disclosure, a thermomagnetic cycle device includes: a magneto-caloric element that emits or absorbs heat depending on an intensity of an external magnetic field; a magnetic field modulation device that modulates the external magnetic field applied to the magneto-caloric element; a heat transport device that generates a both-way flow of heat transport medium that exchanges heat with the magneto-caloric element so that a high temperature end and a low temperature end are generated in the magneto-caloric element; and a phase controller that adjusts a phase difference between a magnetic field phase representing change in the external magnetic field generated by the magnetic field modulation device and a flow phase of the both-way flow generated by the heat transport device by shifting a relative position between the magnetic field modulation device and the magneto-caloric element.

According to the thermomagnetic cycle device, the phase difference between the phase in the magnetic field change and the phase in the both-way flow is controlled by shifting the relative position between the magnetic field modulation device and the magneto-caloric element. In this case, it is possible to employ a phase controller having easy structure.

In order to attain each purpose, mutually different technical means are used in embodiments of the present disclosure. The mark in parenthesis in the appended claims represents a correspondence relation with the embodiments to be mentioned later, and there is no intention to limit the technical scope. The above and other objects, features and advantages of the present disclosure will become more apparent from the following detailed description made with reference to the accompanying drawings.

### BRIEF DESCRIPTION OF DRAWINGS

FIG. 1 is a block diagram illustrating an air-conditioner for a vehicle according to a first embodiment.
FIG. 2 is a sectional view illustrating a MHP device.
FIG. 3 is a cross-sectional view taken along a line III-III of FIG. 2.
FIG. 4 is a cross-sectional view illustrating a phase controller.
FIG. 5 is a sectional view illustrating a flow sensor.
FIG. 6 is a flow chart illustrating operations in the first embodiment.
FIG. 7 is a graph illustrating waveforms of a magnetic field and a flow.
FIG. 8 is a graph illustrating a relation between a phase-lag and an ability.
FIG. 9 is a flow chart illustrating operations in a second embodiment.
FIG. 10 is a graph illustrating a relation between temperature and gas amount.
FIG. 11 is a graph illustrating a relation between pressure and gas amount.
FIG. 12 is a graph illustrating a relation between gas amount and phase-lag.
FIG. 13 is a flow chart illustrating operations in a third embodiment.
FIG. 14 is a cross-sectional view illustrating a phase controller of the third embodiment.
FIG. 15 is a flow chart illustrating operations in a fourth embodiment.
FIG. 16 is a cross-sectional view illustrating a phase controller of the fourth embodiment.
FIG. 17 is a sectional view illustrating a MHP device of a fifth embodiment.
FIG. 18 is a cross-sectional view illustrating the MHP device of the fifth embodiment.
FIG. 19 is a cross-sectional view illustrating the MHP device of the fifth embodiment.
FIG. 20 is a graph illustrating waveforms of a magnetic field and a flow.
FIG. 21 is a sectional view illustrating a MHP device of a sixth embodiment.
FIG. 22 is a graph illustrating a relation between load (Td) and activation amount (RM).
FIG. 23 is a flow chart illustrating operations in the sixth embodiment.
FIG. 24 is a sectional view illustrating a MHP device of a seventh embodiment.
FIG. 25 is a sectional view illustrating a MHP device of an eighth embodiment.
FIG. 26 is a block diagram illustrating a MHP device of a ninth embodiment.
FIG. 27 is a flow chart illustrating operations in the ninth embodiment.
FIG. 28 is a graph illustrating waveforms of a pump operation, a flow, a magnetic field, and a reaction.
FIG. 29 is a block diagram illustrating a MHP device of a tenth embodiment.
FIG. 30 is a flow chart illustrating operations in the tenth embodiment.
FIG. 31 is a block diagram illustrating a MHP device of an eleventh embodiment.

### DESCRIPTION OF EMBODIMENTS

Hereinafter, embodiments will be described according to the drawings. Functionally and/or structurally same or equivalent portions and/or associated portions among respective embodiments below are labeled with same reference numerals or different in hundreds or more in the drawings. The explanation of corresponding portion and/or the associated portion can be referred to the other embodiment.

### Fist embodiment

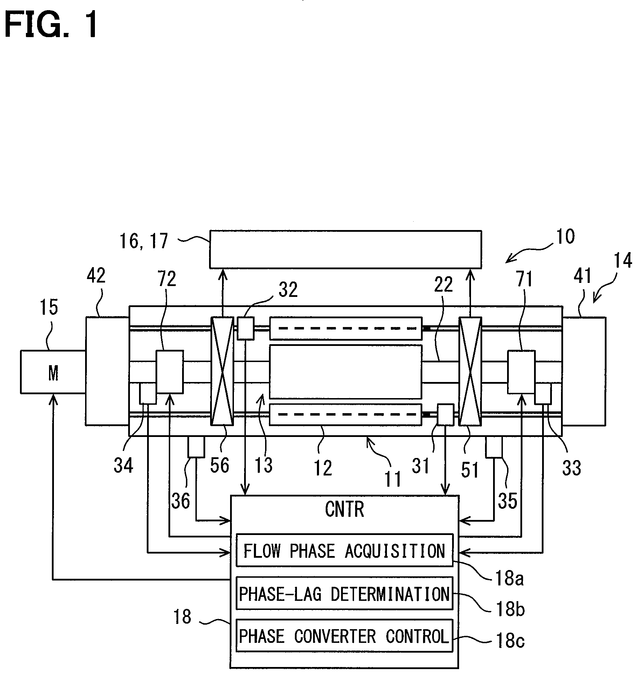

FIG. 1 illustrates an air-conditioner 10 for a vehicle, which is an example of thermal apparatus in a first embodiment. The air-conditioner 10 is carried in a vehicle, and adjusts temperature in a cabin of the vehicle. The air-conditioner 10 includes a magneto-caloric effect type heat pump device 11. The magneto-caloric effect type heat pump device 11 is also called as a MHP (Magneto-caloric effect Heat Pump) device 11. The MHP device 11 offers a thermomagnetic cycle device.

In this specification, the word of heat pump device is used in a broad sense. That is, the word of heat pump device includes both a device using coldness obtained by a heat pump device and a device using warmness obtained by a heat pump device. The device using coldness may also be called as a refrigerating cycle device. In this specification, the word of heat pump device is used as a concept which includes a refrigerating cycle device.

The MHP device 11 includes a magneto-caloric element 12. The magneto-caloric element 12 is also called as a MCE (Magneto-Caloric Effect) element 12. The MCE element 12 produces a heat generation and a heat absorption depending on the intensity of an external magnetic field. The MCE element 12 emits heat when an external magnetic field is applied, and absorbs heat when the external magnetic field is removed. When the external magnetic field is applied to the MCE element 12, electron spins gather in a direction of the magnetic field, and magnetic entropy decreases. Since heat is emitted, the temperature is raised. When the external magnetic field is removed from the MCE element 12, electron spins become disorderly, and magnetic entropy increases. Since heat is absorbed, the temperature is lowered. The MCE element 12 is made of magnetic substance with a high magneto-caloric effect in a normal temperature region. For example, gadolinium base material or lantern-iron-silicon compound can be used. Moreover, a mixture of manganese, iron, phosphorous, and germanium can be used.

One MCE element 12 and its relevant elements define a magneto-caloric element unit. The magneto-caloric element unit is also called as an MCD (Magneto-Caloric effect Device) unit. The MHP device 11 uses the magneto-caloric effect of the MCE element 12. The MHP device 11 includes a magnetic field modulation device 13 and a heat transport device 14 for operating the MCE element 12 as an AMR (Active Magnetic Refrigeration) cycle.

The magnetic field modulation device 13 provides an external magnetic field to the MCE element 12, and increases/decreases the intensity of the external magnetic field. The magnetic field modulation device 13 switches periodically the MCE element 12 between a magnetization state placing the MCE element 12 in a strong magnetic field and a non-magnetization state placing the MCE element 12 in a weak or zero magnetic field. The magnetic field modulation device 13 modulates the external magnetic field by periodically repeating a magnetization period during which the MCE element 12 is kept in the strong external magnetic field and a non-magnetization period during which the MCE element 12 is kept in an external magnetic field weaker than that of the magnetization period. The magnetic field modulation device 13 includes a source of magnetism such as permanent magnet or electromagnet, for generating the external magnetic field.

The heat transport device 14 includes a fluid apparatus for flowing the heat transport medium to carry heat emitted or absorbed by the MCE element 12. The heat transport device 14 is a device that makes the heat transport medium to flow, while exchanging heat with the MCE element 12, along the MCE element 12. The heat transport device 14 flows the heat transport medium to generate a high temperature end and a low temperature end in the MCE element 12.

The heat transport medium to exchange heat with the MCE element 12 is called as a primary medium. The primary medium may be fluid such as antifreeze solution, water, or oil. The heat transport device 14 moves the heat transport medium in both-way, synchronizing with the increase/decrease in the magnetic field by the magnetic field modulation device 13. The heat transport device 14 may include a pump for pumping the heat transport medium. The heat transport device 14 includes pumps 41 and 42 for pumping the primary medium. The pump 41, 42 supplies a both-way flow of the primary medium relative to one MCE element 12. The pumps 41 and 42 are arranged to the respective ends of the MCE element 12. The pumps 41, 42 are configured to execute an admission stroke and a discharge stroke complementarily.

The MHP device 11 includes a motor (MTR) 15 as a source of power. The motor 15 is a source of power for the magnetic field modulation device 13. The motor 15 is a source of power for the heat transport device 14. The motor 15 provided as a source of power for the MHP device 11 is driven by a battery mounted in the vehicle.

The motor 15 and the magnetic field modulation device 13 periodically place the MCE element 12 between a state in which an external magnetic field is applied to and a state in which the external magnetic field is removed from (a state where an external magnetic field is not impressed). The motor 15 drives the pumps 41 and 42 of the heat transport device 14. Thereby, the motor 15 and the pump 41, 42 produce a both-way flow of the primary medium in one MCE element 12. The pump 41, 42 produces a both-way flow of the heat transport medium in an MCD unit for operating the MCE element 12 as an AMR cycle.

The MHP device 11 includes phase controllers 71 and 72. The phase controller 71, 72 offers a phase regulation part. The phase controller 71, 72 controls a phase difference between the phase of the magnetic field change generated by the magnetic field modulation device 13 and the phase of the both-way flow generated by the heat transport device 14. The phase controller 71, 72 adjusts a phase difference between a periodic change in the magnetic field generated by the magnetic field modulation device 13 and a periodic change in the flow direction of the heat transport medium generated by the heat transport device 14. The phase controller 71, 72 is located between the magnetic field modulation device 13 and the heat transport device 14. The phase controller 71, 72 adjusts a phase difference in the mechanical interlocking relation between the magnetic field modulation device 13 and the heat transport device 14. The phase controller 71, 72 adjusts a mechanical phase difference regarding the rotational direction. In this embodiment, since the heat transport device 14 has the two pumps 41 and 42, two phase controllers 71 and 72 are used.

One phase controller 71 is located between a rotation shaft for the magnetic field modulation device 13 and the heat transport device 14. The phase controller 71 is formed between a rotation shaft for the magnetic field modulation device 13 and the pump 41. One phase controller 72 is located between a rotation shaft for the magnetic field modulation device 13 and the heat transport device 14. The phase controller 72 is formed between a rotation shaft for the magnetic field modulation device 13 and the pump 42.

The air-conditioner 10 includes a high temperature system 16 along which the high temperature obtained by the MHP device 11 is transported. The high temperature system 16 is also a thermal apparatus using the high temperature obtained by the MHP device 11. The MHP device 11 includes a low temperature system 17 along which the low temperature acquired by the MHP device 11 is transported. The low temperature system 17 is also a thermal apparatus using the low temperature acquired by the MHP device 11. The high temperature system 16 and the low temperature system 17 include a heat exchanger 51 and a heat exchanger 56, respectively, in which heat is exchanged between a primary medium corresponding to the heat transport medium and a secondary medium. The heat exchanger 51, 56 is described in JP 2014-62682 A.

The air-conditioner 10 includes a control device (CNTR) 18. The control device 18 is an electronic control unit (Electronic Control Unit). The control device 18 has a processing unit (CPU) and a memory (MMR) as a storage medium which memorizes a program. The control device 18 is provided with a microcomputer equipped with a storage medium which can be read by computer. The storage medium un-temporarily stores a program which can be read by computer. A storage medium can be provided with semiconductor memory or magnetic disk. The program is executed by the control device 18, such that the control device 18 operates as a device written in this specification and performs the control method written in this specification. The functional block provided by the control device 18 should be treated as means, only when intentionally specified as means.

The MHP device 11 includes plural sensors. The sensor detects a physical quantity to be detected, and outputs an electric signal representing the detected physical quantity. The sensor is electrically connected with the control device 18, and the output signal is inputted into the control device 18.

The MHP device 11 includes at least one flow sensor. The MHP device 11 may include plural flow sensors respectively corresponding to the plural MCE elements 12, namely, respectively corresponding to the plural work chambers. Alternatively, the MHP device 11 may include one flow sensor to detect a flow for a typical MCE element 12, i.e., a flow in a representing work chamber.

Two flow sensors 31 and 32 are illustrated in FIG. 1. The flow sensor 31, 32 outputs an electric signal representing a flow direction of the both-way flow of the heat transport medium. The flow sensor 31, 32 outputs different electric signals, one of which represents a forward direction flow FN, and the other represents a reverse direction flow FM. The flow sensors 31 and 32 are used to detect a change timing in the flow direction of the heat transport medium. The flow sensors 31 and 32 are used to detect a timing at which the flow direction of heat transport medium is reversed. The flow sensors 31 and 32 are used to detect the phase of the both-way flow. In other words, the flow sensors 31 and 32 are used to acquire the phase of the both-way flow.

The MHP device 11 includes at least one phase sensor. Two phase sensors 33 and 34 are illustrated in FIG. 1. The phase sensor 33, 34 outputs an electric signal representing a phase difference in the rotational direction between the input and the output of the phase controller 71, 72. The phase controller 71, 72 includes an input rotation sensor which detects the rotation phase of an input axis, and an output rotation sensor which detects the rotation phase of an output axis. The phase difference of the phase controller 71, 72 is represented by a difference between the output from the input rotation sensor and the output from the output rotation sensor.

The phase controller 71, 72 adjusts a mechanical phase difference in the rotational direction between the magnetic field modulation device 13 and the heat transport device 14. Therefore, the phase sensor 33, 34 detects a mechanical phase difference in the rotational direction between the magnetic field modulation device 13 and the heat transport device 14. That is, the phase sensor 33, 34 detects a mechanical phase difference generated by the phase controller 71, 72. The mechanical phase difference is used for feedback control of the phase controller 71, 72.

The MHP device 11 includes at least one temperature sensor 35. The temperature sensor 35 outputs an electric signal representing the temperature of the MHP device 11. The temperature sensor 35 is used to detect the temperature of the high temperature end or the temperature of the low temperature end of the MHP device 11. The temperature sensor 35 is used for detecting the temperature as a variable correlated with a generation amount of air bubbles in the heat transport medium. The temperature sensor 35 is one of sensors observing the state of heat transport medium. In many cases, the temperature of the high temperature end has strong correlation with the generation amount of air bubbles. The temperature sensor 35 may be configured to detect the temperature of heat transport medium or the environment temperature of the MHP device 11, such as temperature in the engine room of the vehicle, and to output an electric signal representing the detected temperature.

The MHP device 11 includes at least one pressure sensor 36. The pressure sensor 36 outputs an electric signal representing the pressure of the heat transport medium in the MHP device 11. The pressure sensor 36 is used to detect the pressure of the heat transport medium in the high temperature end or the low temperature end of the MHP device 11. The pressure sensor 36 is used for detecting the pressure as a variable correlated with the generation amount of the air bubbles in the heat transport medium. The pressure sensor 36 is one of the sensors observing the state of heat transport medium. In many cases, the pressure in the work room 26 where the pressure of heat transport medium falls has strong correlation with the generation amount of the air bubbles.

The control device 18 controls plural controllable elements of the air-conditioner 10. For example, the control device 18 controls the motor 15 at least to switch the MHP device 11 between on and off. The control device 18 controls the magnetic field modulation device 13 and the heat transport device 14 through the motor 15 to operate the MHP device 11 as heat pump. The control device 18 controls the magnetic field modulation device 13 and the heat transport device 14 through the motor 15 to generate a high temperature end and a low temperature end at the respective ends of the MCE element 12.

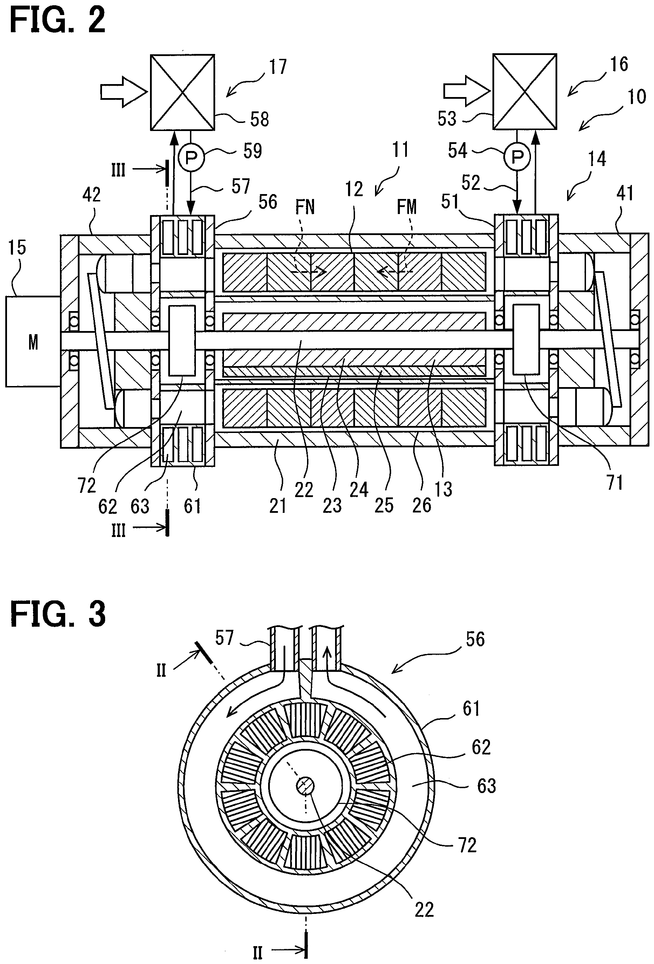

The MHP device 11 is illustrated in FIG. 2. A group of the MCE elements 12 has plural portions arranged along the longitudinal direction of the MCE element 12, i.e., the flow direction of the primary medium. The materials respectively forming the plural portions are different in curie temperature. The plural portions have high magneto-caloric effects (ΔS (J/kgK)) in different temperature zones. A portion near the high temperature end has a material composition which has a high magneto-caloric effect at a temperature near a typical temperature at the high temperature end in a steady operation state. A portion near the middle temperature part has a material composition which has a high magneto-caloric effect at a temperature near a typical temperature at the middle temperature part in a steady operation state. A portion near the low temperature end has a material composition which has a high magneto-caloric effect at a temperature near a typical temperature at the low temperature end in a steady operation state.

The temperature zone in which each portion of the MCE element 12 has a high magneto-caloric effect is called as an efficient temperature zone. The plural portions are arranged in series so that the efficient temperature zones are located in a line between the high temperature end and the low temperature end. The plural portions share a regular difference in temperature made between the high temperature end and the low temperature end in a steady operation. Thereby, high efficiency is acquired in each of the portions. In other words, the MCE element 12 is adjusted so that each element unit has magneto-caloric effect which exceeds a predetermined threshold value when the regular difference in temperature is obtained.

The heat transport device 14 generates a both-way flow FM and FN of heat transport medium, synchronizing with change in the external magnetic field by the magnetic field modulation device 13. The motor 15 rotates a rotor core 24 of the magnetic field modulation device 13.

The pump 41, 42 is a capacity type both-way flow pump. The pump 41, 42 is a slanting board type piston pump. The pump 41, 42 is an axial piston pump with many cylinders. Two cylinders matched with one MCE element 12 operate complementarily. Thereby, the both-way flow of the primary medium is produced to flow along the longitudinal direction of one MCE element 12. In this embodiment, the MHP device 11 includes plural MCE elements 12 thermally connected in parallel.

The MHP device 11 includes a housing 21 shaped in a pipe or cylinder. The housing 21 coaxially supports a rotation shaft 22 to be rotatable. The rotation shaft 22 is connected with an output shaft of the motor 15. The housing 21 defines a housing chamber 23 housing the magnetic field modulation device 13 around the rotation shaft 22. The housing chamber 23 is a cylindrical space. The rotor core 24 is fixed to the rotation shaft 22. The rotor core 24 offers a yoke for letting magnetic flux pass, with the housing 21. The rotor core 24 has a range where magnetic flux easily passes and a range where magnetic flux hardly passes along the circumferential direction. A permanent magnet 25 is fixed to the rotor core 24. The permanent magnet 25 partially has a cylindrical shape, and the cross-section is shaped in a sector. The permanent magnet 25 is fixed to the perimeter side of the rotor core 24.

The rotor core 24 and the permanent magnet 25 define a domain where the external magnetic field provided by the permanent magnet 25 becomes strong, and a domain where the external magnetic field provided by the permanent magnet 25 becomes weak, therearound. In the domain where the external magnetic field becomes weak, most of the external magnetic field is removed. The rotor core 24 and the permanent magnet 25 rotate synchronizing with rotation of the rotation shaft 22. Therefore, the domain where the external magnetic field is strong, and the domain where the external magnetic field is weak rotate synchronizing with rotation of the rotation shaft 22. As a result, at one point around the rotor core 24 and the permanent magnet 25, a period during which the external magnetic field is impressed strongly, and a period during which the external magnetic field is mostly removed to be weak arise repeatedly. Therefore, the rotor core 24 and the permanent magnet 25 offer the magnetic field modulation device 13 which repeats impression and removal of an external magnetic field. The rotor core 24 and the permanent magnet 25 offer a device which switches impression and removal of the external magnetic field to the MCE element 12. The word of a magnetic field can be read as magnetic fields.

The housing 21 defines and forms at least one work room 26. The work room 26 is located adjacent to the housing chamber 23. The housing 21 forms plural work rooms 26 arranged at equal interval, on the outer side of the housing chamber 23 in the radial direction. In this embodiment, one housing 21 provides ten work rooms 26. Each of the work rooms 26 forms a pillar-shaped space having the longitudinal direction along the axial direction of the housing 21. One work room 26 is formed to correspond to one cylinder of the pump 41 and one cylinder of the pump 42. Two cylinders are arranged at the respective sides of the one work room 26.

The work room 26 offers a primary passage for flowing a primary medium. The housing 21 is also a passage component that forms plural primary passages for the primary medium. The primary medium flows in the work room 26 along the longitudinal direction. The primary medium flows in both directions along the longitudinal direction inside of the work room 26.

The work room 26 offers a housing chamber which houses the MCE element 12. The housing 21 offers a container in which the work room 26 is formed. The MCE element 12 is arranged in the work room 26, as magnetic working material which has a magneto-caloric effect.

The one MCE element 12 is formed in a stick shape having the longitudinal direction along the axial direction of the MHP device 11. The MCE element 12 has the shape to be able to fully carry out heat exchange with the primary medium flowing through the work room 26. Each of the MCE elements 12 is also called an element bed.

The MCE element 12 is put under the external magnetic field impressed or removed by the magnetic field modulation device 13. That is, the rotation of the rotation shaft 22 alternately switches the MCE element 12 between the state where the external magnetic field is impressed to magnetize, and the state where the external magnetic field is removed from.

The high temperature system 16 includes the heat exchanger 51 for heat exchange between a primary medium and a secondary medium. A secondary medium is a heat transport medium used to convey heat in the high temperature system 16. A secondary medium can be provided by fluid, such as an antifreeze solution, water, and oil. The high temperature system 16 includes a passage 52 where a secondary medium circulates. The high temperature system 16 includes a heat exchanger 53 for heat exchange between a secondary medium and other media. For example, the heat exchanger 53 offers heat exchange between a secondary medium and air. The high temperature system 16 includes a pump 54 for pumping a secondary medium. The pump 54 pumps a secondary medium to circulate through the heat exchanger 51, the passage 52, and the heat exchanger 53. The high temperature system 16 is also an apparatus to cool the high temperature end by removing heat away from the high temperature end of the MHP device 11.

The low temperature system 17 includes the heat exchanger 56 for heat exchange between a primary medium and a secondary medium. A secondary medium is a heat transport medium used to convey heat in the low temperature system 17. A secondary medium can be provided by fluid, such as an antifreeze solution, water, and oil. The low temperature system 17 includes a passage 57 where a secondary medium circulates. The low temperature system 17 includes a heat exchanger 58 for heat exchange between a secondary medium and other media. For example, the heat exchanger 58 offers the heat exchange between a secondary medium and air. The low temperature system 17 includes a pump 59 for pumping a secondary medium. The pump 59 pumps a secondary medium to circulate through the heat exchanger 56, the passage 57, and the heat exchanger 58. The low temperature system 17 is also an apparatus to heat the low temperature end by providing heat to the low temperature end of the MHP device 11.

The heat exchangers 51 and 56 are symmetrically arranged to the respective ends of the MCE elements 12. The heat exchangers 51 and 56 have components mutually corresponding to each other. The heat exchanger 56 is explained in detail below. This explanation is applicable also to the heat exchanger 51. The heat exchanger 56 has a body 61. The body 61 is formed by combining plural components.

The body 61 is a passage component which forms plural primary passages 62 for a primary medium. The plural primary passages 62 are located on extension of plural work rooms 26. The plural primary passages 62 are arranged at equal interval along the circumferential direction of the heat exchanger 56. The body 61 is also a passage component which forms plural secondary passages 63 for a secondary medium. In order to facilitate the heat exchange between a primary medium and a secondary medium, the body 61 is formed so that a high heat transfer coefficient can be realized. In this embodiment, the body 61 is made of metal such as aluminum base. The body 61 may be made of copper base metal or resin material.

FIG. 3 illustrates the cross-section of the heat exchanger 56 taken along a line III-III of FIG. 2. FIG. 2 illustrates the section taken along a line II-II of FIG. 3. One primary passage 62 corresponds to one work room 26. For example, ten primary passages 62 are formed in FIG. 3. The primary passage 62 penetrates the cylindrical heat exchanger 56 along the axial direction. Plural fins are arranged in the primary passage 62 to offer large area for heat exchange.

The heat exchanger 56 has the secondary passage 63 for a secondary medium to flow. The body 61 defines the secondary passage 63. The secondary passage 63 is extended along the circumferential direction of the heat exchanger 56. The secondary passage 63 is a one way passage from an entrance to an exit. The secondary passage 63 is a passage which extends in one direction along the circumferential direction of the heat exchanger 56. The secondary passage 63 passes by near the plural primary passages 62. The secondary passage 63 passes by in order near the plural primary passages 62. The secondary passage 63 passes by near the plural primary passages 62 every once. The secondary passage 63 is formed to make one turn around the radially outer side of the cylindrical heat exchanger 56. Plural fins are arranged in the secondary passage 63 to offer large area for heat exchange.

As shown in FIG. 2, the two heat exchangers 53 and 58 offer a part of the air-conditioner 10. The heat exchanger 53 is a high temperature side heat exchanger which becomes higher in temperature than the heat exchanger 58. The heat exchanger 53 is also called an indoor heat exchanger. The heat exchanger 58 is a low temperature side heat exchanger which becomes lower in temperature than the heat exchanger 53. The heat exchanger 58 is also called an outdoor heat exchanger. The air-conditioner 10 includes air system apparatus such as an air-conditioning duct and a fan for using the high temperature side heat exchanger 53 and/or the low temperature side heat exchanger 56 for air-conditioning the cabin.

The air-conditioner 10 is used as a cooler or a heater. The air-conditioner 10 may include a cooler which cools air to be supplied into the cabin, and a heater which reheats the air cooled by the cooler. The MHP device 11 is used as a coldness supply source, or a warmness supply source in the air-conditioner 10. That is, the heat exchanger 53 can be used as the heater, and the heat exchanger 58 can be used as the cooler.

When the MHP device 11 is used as a warmness supply source, the air passing through the heat exchanger 53 is supplied to the cabin of the vehicle, and is used for heating. At this time, the air passing through the heat exchanger 58 is discharged out of the cabin. When the MHP device 11 is used as a coldness supply source, the air passing through the heat exchanger 58 is supplied to the cabin of the vehicle, and is used for cooling. At this time, the air passing through the heat exchanger 53 is discharged out of the cabin. The MHP device 11 may be used as a dehumidifier device. In this case, the air passing through the heat exchanger 58 passes the heat exchanger 53, and is supplied into the cabin. The MHP device 11 is used as a warm heat supply source in winter and in summer.

As shown in FIG. 1, the control device 18 controls the phase controllers 71 and 72. The control device 18 controls the phase controllers 71 and 72 so that the phase difference between the magnetic field phase representing change in the magnetic field by the magnetic field modulation device 13 and the flow phase of the both-way flow by the heat transport device 14 becomes equal to a target phase difference. The motor 15 is directly connected to, for example, the pump 42 of the magnetic field modulation device 13. Therefore, the magnetic field phase representing the change in the magnetic field change by the magnetic field modulation device 13 can be observed as a rotation position of the motor 15. In this embodiment, the magnetic field phase of the magnetic field change by the magnetic field modulation device 13 can be observed based on the electric signal from the phase sensor 33, 34.

The magnetic field phase of the magnetic field change by the magnetic field modulation device 13 is represented by a timing when the intensity of the magnetic field intersects a standard intensity of the magnetic field by which the MCE element 12 can demonstrate a magneto-caloric effect which exceeds a predetermined ability.

The flow phase of both-way flow can be observed based on the electric signal from the flow sensor 31, 32. The flow phase of both-way flow is represented by a timing when the flowing direction is reversed.

The control device 18 has plural functional blocks 18a-18c. The functional block 18a offers a flow phase acquisition part which acquires the flow phase of the both-way flow by the heat transport device 14. The flow phase is acquired by detecting a flow phase directly, i.e., by observing a flow phase. The flow phase may be acquired by presuming based on physical quantity correlated with a flow phase, i.e., by estimating. In this embodiment, a flow phase is detected based on the electric signal outputted from the flow sensor 31, 32.

The functional block 18b offers a phase determining part which determines whether the acquired flow phase corresponds to the target phase on which the MHP device 11 can function at high efficiency. Here, the phase difference between the acquisition flow phase and the magnetic field phase of the magnetic field change by the magnetic field modulation device 13 is used. The phase difference calculated based on the acquisition flow phase can be called as a real phase difference. The real phase difference is deviated from the calculation phase difference which should be realized based on the mechanical structure due to various factors, such as compressibility of a heat transport medium, and a leak of a heat transport medium. In many cases, the real phase difference is behind the calculation phase difference. In other words, the phase of the both-way flow is behind the phase of magnetic field change. The phase difference acquisition part is provided by the functional blocks 18a and 18b to acquire the phase difference.

It is desirable that the acquisition phase difference is equal to a target phase difference which is a predetermined amount of delay, in order that the MHP device 11 demonstrates high efficiency as an AMR cycle. The target phase difference is a delay phase difference by which the flow phase is delayed from the magnetic field phase. However, the real phase difference is deviated from the target phase difference, for example, due to the above-described air bubbles. The acquisition phase difference is a delay phase difference which is further delayed behind the target phase difference. Therefore, it is difficult to make the real phase difference to be equal with the target phase difference by controlling the phase controllers 71 and 72 only by the calculation based on the mechanical structure. So, in this embodiment, the phase controllers 71 and 72 are controlled so that the real phase difference is in agreement with the target phase difference.

The functional block 18c offers a control part which controls the phase controllers 71 and 72 so that the real phase difference calculated based on the acquired flow phase approaches and agrees the target phase difference. The functional block 18c is also a feedback control part which carries out feedback control of the phase controllers 71 and 72 so that the acquired real phase difference becomes equal to the target phase difference. When the difference between the real phase difference and the target phase difference is within a predetermined tolerance range, it can be said that the real phase difference is in agreement with the target phase difference.

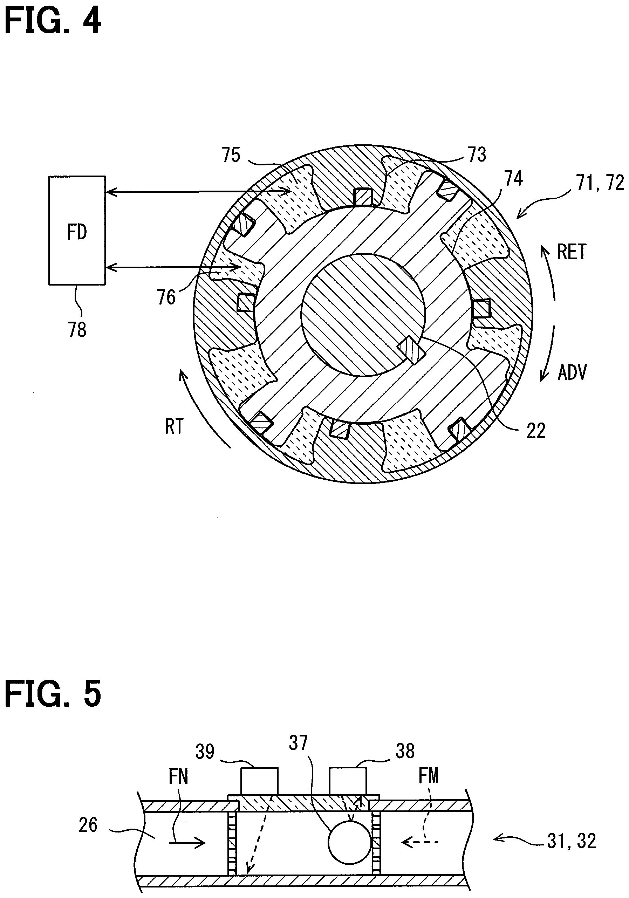

FIG. 4 illustrates the cross-section of the phase controller 71, 72. The phase controller 71, 72 is a vane type phase controller. The phase controller 71 and the phase controller 72 have the same structures. Hereafter, the phase controller 71 is explained. The phase controller 71 has a housing 73 and a rotor 74. The housing 73 houses the rotor 74 inside. Capacity chambers 75 and 76 are defined between the housing 73 and the rotor 74 for operation fluid. The capacity chamber 75, 76 is defined between a shoe portion defined on the inner side of the housing 73 and a vane portion defined on the outer side of the rotor 74 in the circumferential direction.

The phase controller 71 adjusts the phase difference between the rotatable input axis and the rotatable output axis in the rotational direction. The housing 73 is connected with one of the input axis and the output axis. The rotor 74 is connected with the other of the input axis and the output axis. For example, the housing 73 is connected with the pump 41, and the rotor 74 is connected with the rotor core 24. The capacity of the capacity chamber 75, 76 is variable. The capacity of the capacity chamber 75, 76 is changed by the phase difference between the housing 73 and the rotor 74.

When the housing 73 and the rotor 74 rotate in the rotational direction RT, the rotor 74 can be rotated relative to the housing 73 in the advance direction ADV and the retard direction RET. For example, when the volume of the first capacity chamber 75 (called an advance chamber) decreases and the volume of the second capacity chamber 76 (called a retard chamber) increases, the phase of the rotor 74 to the housing 73 changes in the advance direction ADV. When the volume of the first capacity chamber 75 increases and the volume of the second capacity chamber 76 decreases, the phase of the rotor 74 to the housing 73 changes in the retard direction RET. Thus, the phase controller 71 is provided corresponding to the advance direction ADV and the retard direction RET, and has the housing 73 and the rotor 74 as a component which forms the plural capacity chambers 75 and 76 in which the operation fluid is input.

The phase controller 71 has a fluid device (FD) 78 which controls supply of the operation fluid to the capacity chambers 75 and 76, and discharge of the operation fluid from the capacity chambers 75 and 76. The fluid device 78 can be provided by a pump and a control valve.

The cross-section of the flow sensor 31, 32 is illustrated in FIG. 5. The flow sensor 31, 32 directly observes the flow direction of the heat transport medium. The flow sensor 31, 32 can also be called as an optical flow direction sensor. The flow sensor 31 and the flow sensor 32 have the same structure. Hereafter, the flow sensor 31 is explained. The flow sensor 31 includes a float 37 which moves in response to the flow of heat transport medium. The float 37 is arranged in the work room 26. The flow sensor 31 has optical sensors 38 and 39 which optically detect the position of the float 37. When the optical sensor 38 detects the float 37, the flow direction of the heat transport medium is in the forward direction FN. When the optical sensor 39 detects the float 37, the flow direction of the heat transport medium is in the reverse direction FM.

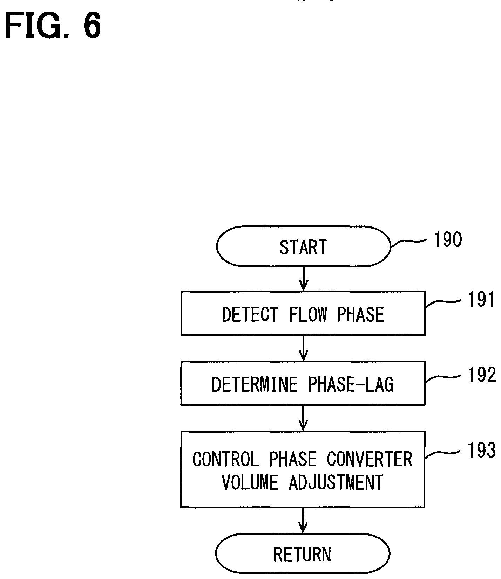

In FIG. 6, the control device 18 executes a phase control processing 190. The phase control processing 190 controls the phase controllers 71 and 72 so that the output of the MHP device 11 is maximized as a refrigerating device.

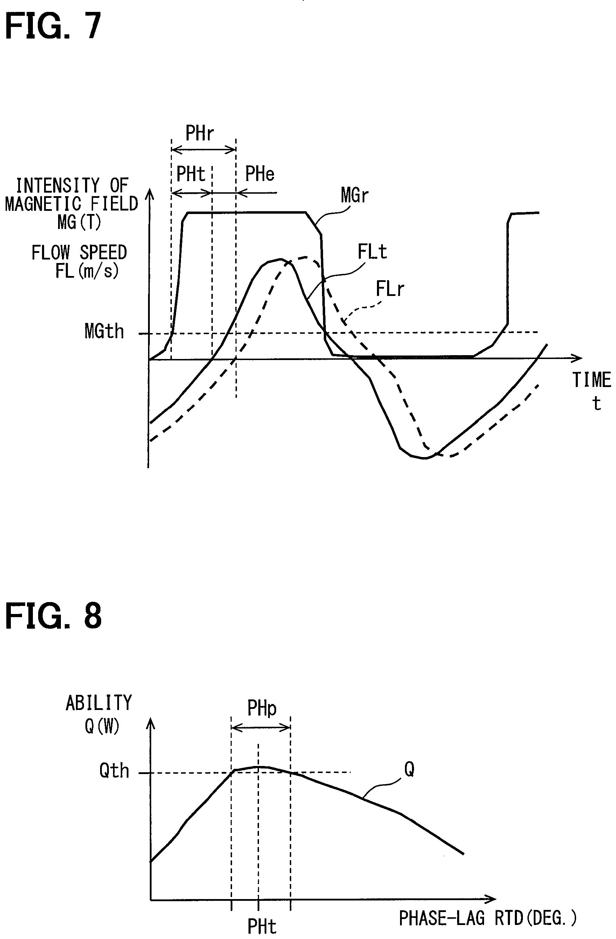

FIG. 7 illustrates the waveform of the magnetic field MG and the waveform of the flow FL. FIG. 8 illustrates the output Q of the MHP device 11 to the phase-lag RTD. When the flow waveform FLt is behind the actual magnetic field waveform MGr by the target phase difference PHt, the ability Q becomes the maximum. The target phase difference PHt is a phase difference by which the MCE element 12 can have the high ability as an AMR cycle. The target phase difference PHt is a phase difference between a timing at which the intensity of magnetic field reaches a level MGth such that the MCE element 12 has a predetermined magneto-caloric effect, and a timing at which the flow of heat transport medium is reversed.

In case where air bubbles are generated in the heat transport medium, the flow phase is delayed by the compressibility of air bubbles. The actual flow waveform FLr, when air bubbles are generated, is behind an ideal flow waveform FLt only by an error phase difference PHe. At this time, the actual flow waveform FLr is behind the actual magnetic field waveform MGr by the acquired acquisition phase difference PHr.

In order to maintain the ability Q to be near the maximum, the phase-lag RTD needs to be maintained within a predetermined target range PHp. The high ability more than the threshold value Qth can be achieved by controlling the acquisition phase difference PHr within the target range PHp including the target phase difference PHt.

The control device 18 controls the phase controllers 71 and 72 so that the acquisition phase difference PHr observed between the magnetic field waveform MGr and the flow waveform FLr is controlled within the target range PHp including the target phase difference PHt while air bubbles are generated in the heat transport medium.

In Step 191 of FIG. 6, the control device 18 detects the flow phase based on the output of the flow sensor 31, 32 by observing the flow of heat transport medium by the flow sensor 31, 32. Step 191 offers the functional block 18a which acquires a flow phase. Step 191 offers the flow phase acquisition part which acquires the flow phase of the both-way flow of heat transport medium. The flow phase is acquired by observing the actual flow of heat transport medium. Therefore, even while air bubbles are generated, the flow phase which is delayed by the air bubbles can be observed.

In Step 192, the control device 18 determines whether the phase-lag amount is equal to a desired value. Step 192 offers the functional block 18b which determines whether the phase-lag is in the proper range. Step 192 offers the phase determining part which acquires the acquisition phase difference PHr based on the magnetic field phase representing change in the external magnetic field and the acquisition flow phase acquired by the flow phase acquisition part. Here, the magnetic field phase can be specified based on the mechanical interlocking relation between the motor 15 and the magnetic field modulation device 13 in a fixed manner. At Step 192, it is determined whether the acquisition phase difference PHr is within the target range PHp.

In Step 193, the control device 18 controls the phase controllers 71 and 72. The control device 18 controls the phase controller 71, 72 so that the acquired acquisition phase difference PHr approaches the desirable target phase difference PHt. The control device 18 controls the acquisition phase difference PHr within the target range PHp including the target phase difference PHt. The control device 18 controls the phase controller 71, 72 to maintain the acquisition phase difference PHr within the target range PHp. It can be said that the control device 18 controls the phase controller 71, 72 to reduce the error phase difference PHe between the acquisition phase difference PHr and the target phase difference PHt. The phase controllers 71 and 72 receive feedback control. Step 193 offers the functional block 18c which controls a phase converter. Step 193 offers a control part. The phase difference is controlled in Step 193 by adjusting the volume ratio between the capacity chambers 75 and 76.

Thereby, the phase controllers 71 and 72 are controlled so that the phase difference between the magnetic field waveform MGr and the flow waveform FLr is in agreement with the desired value PHt. In this embodiment, the agreement means that the phase difference between the magnetic field waveform MGr and the flow waveform FLr is mathematically equal to the desired value PHt, and that the phase difference between the magnetic field waveform MGr and the flow waveform FLr is within the range PHp including the desired value PHt.

According to the embodiment, a phase gap (phase-lag) of the both-way flow caused by gas generated in heat transport medium is acquired. The phase difference between the magnetic field modulation device 13 and the heat transport device 14 is adjusted in response to the acquired phase gap. This adjustment is performed to maintain the output of the MHP device 11 to be near the maximum. As a result, the MHP device 11 can maintain high capability, even if a disturbance is generated in the flow of heat transport medium, for example, by air bubbles in the heat transport medium. The phase-lag is determined based on the flow waveform observed by the sensor. Therefore, the phase-lag amount in the flow waveform caused by disturbance, such as air bubbles, can be correctly detected. As a result, the phase difference is controlled correctly to a desirable value. The adjustment of the phase difference is performed by the phase controller 71, 72. According to this embodiment, the thermomagnetic cycle device is provided in which the phase difference between the magnetic field change and the both-way flow can be adjusted in the desirable state.

### Second embodiment

This embodiment is a modification of the preceding fundamental embodiment. In the first embodiment, the flow phase is acquired by observing the flow of heat transport medium by the sensor 31, 32. In a second embodiment, the flow phase is acquired by predicting the amount of gas in a heat transport medium, which is caused by air bubbles.

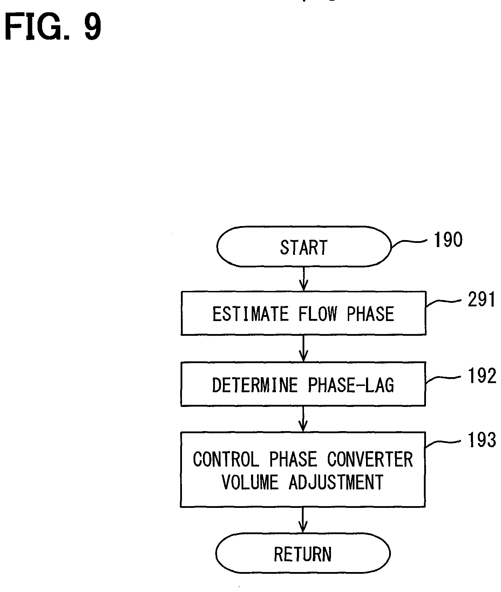

As illustrated in FIG. 9, in Step 291, the control device 18 estimates a flow phase. The flow phase is presumed based on the presumed amount of air bubbles and a standard phase of the flow waveform generated by the heat transport device 14, without observing the flow direction of the heat transport medium. The air bubbles generated in the heat transport medium includes air bubbles generated when being less than a saturation pressure and/or a saturation temperature, and air bubbles generated by a cavitation. In this embodiment, the total amount Gv of air bubbles is presumed based on the amount Gvs of air bubbles presumed from the saturation conditions, and the amount Gvc of air bubbles presumed from the cavitation.

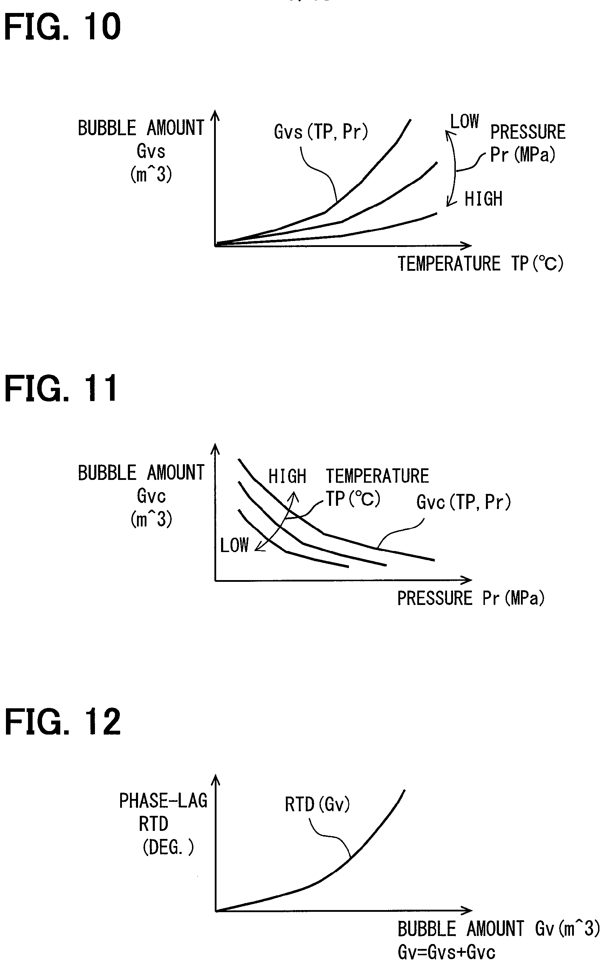

FIG. 10 illustrates a graph representing the air bubbles amount Gvs (TP, Pr) (m³) presumed based on the temperature TP (°C) and the pressure Pr (MPa). The temperature TP is a temperature at a portion in the MHP device 11 where the air bubbles are most easily generated. The pressure Pr is a pressure at a portion in the MHP device 11 where the air bubbles are most easily generated. The MHP device 11 includes a pressure sensor in this embodiment. The air bubbles amount Gvs represents the amount of air bubbles generated by gas component dissolved in the heat transport medium due to the fall in pressure and/or the fall in temperature.

FIG. 11 illustrates a graph representing the air bubbles amount Gvc (TP, Pr) (m³) presumed based on the pressure Pr (MPa) and the temperature TP (°C). In some cases, a cavitation is generated, depending on the form of the work room 26, in the heat transport medium. As a result, air bubbles are generated. The air bubbles amount Gvc represents the amount of air bubbles generated by the cavitation in the heat transport medium.

FIG. 12 illustrates a graph representing the phase-lag amount RTD of a flow waveform to the air bubbles amount Gv. The air bubbles amount Gv is the sum of the air bubbles amount Gvs and the air bubbles amount Gvc. The phase-lag amount becomes larger, as the air bubbles amount Gv is increased.

Step 291 offers a flow phase acquisition part. In this embodiment, both of the air bubbles amount Gvs and the air bubbles amount Gvc are used. Alternatively, either one of the air bubbles amount Gvs and the air bubbles amount Gvc may be used. Step 291 presumes a flow phase based on the output of the temperature sensor 35 and/or the pressure sensor 36.

In this embodiment, the thermomagnetic cycle device is provided in which the phase difference between the magnetic field change and the both-way flow can be adjusted in the desirable state. The phase difference of the flow waveform is presumed based on the related physical quantity, without directly

This embodiment is a modification of the preceding fundamental embodiments. In the above embodiments, the phase difference is adjusted by adjusting the volume of the capacity chambers 75 and 76 of the phase controller 71, 72. Alternatively, in this embodiment, damping characteristic is given for adjusting the phase difference to a desirable phase difference by generating air bubbles of a predetermined amount in the capacity chamber 75, 76. In this embodiment, air bubbles of a predetermined are injected into at least one capacity chamber 75, 76.

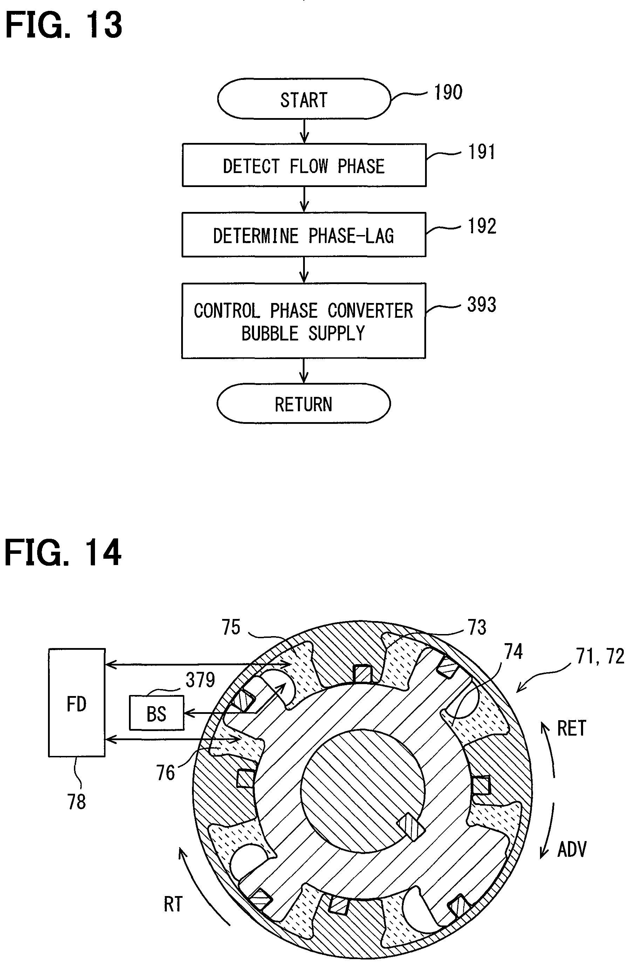

As illustrated in FIG. 13 , in Step 393, the phase difference is adjusted by supplying intentionally air bubbles in the capacity chamber 75, 76. Therefore, the control part in this embodiment controls the phase difference by giving a damping function to the phase controller 71, 72.

As illustrated in FIG. 14 , the phase controller 71, 72 includes a bubble source 379 (BS) that injects air bubbles into the first capacity chamber 75. The bubble source 379 offers an air bubble injector to give a damping function by injecting air bubbles into the capacity chamber 75. A control part controls the phase difference by controlling the air bubble injector. When air bubbles are poured into the first capacity chamber 75 by the bubble source 379, the rotor 74 becomes easy to rotate by the compressibility of air bubbles in the advance direction ADV. The bubble source 379 can perform injection and removal of air bubbles relative to the capacity chamber 75, 76. The bubble source 379 may be configured to inject air bubbles relative to both of the first capacity chamber 75 and the second capacity chamber 76. The bubble source 379 may be configured to inject air bubbles only to the second capacity chamber 76.

The amount of air bubbles is set based on the error phase difference PHe. Air bubbles add the damping function equivalent to the error phase difference PHe to the phase controller 71, 72. As a result, the phase controller 71, 72 is rotated in the advance direction ADV to compensate the phase-lag caused by the air bubbles in the heat transport medium. Thereby, the phase difference between the magnetic field modulation device 13 and the heat transport device 14 approaches a desirable phase difference (target phase difference PHt). According to this embodiment, a desirable phase difference is realized by comparatively easy structure.

### Fourth embodiment

This embodiment is a modification of the preceding fundamental embodiments. Air bubbles are put into the capacity chamber 75, 76 in the above embodiments. Alternatively, in this embodiment, the temperature of operation fluid is adjusted to generate air bubbles in the operation fluid.

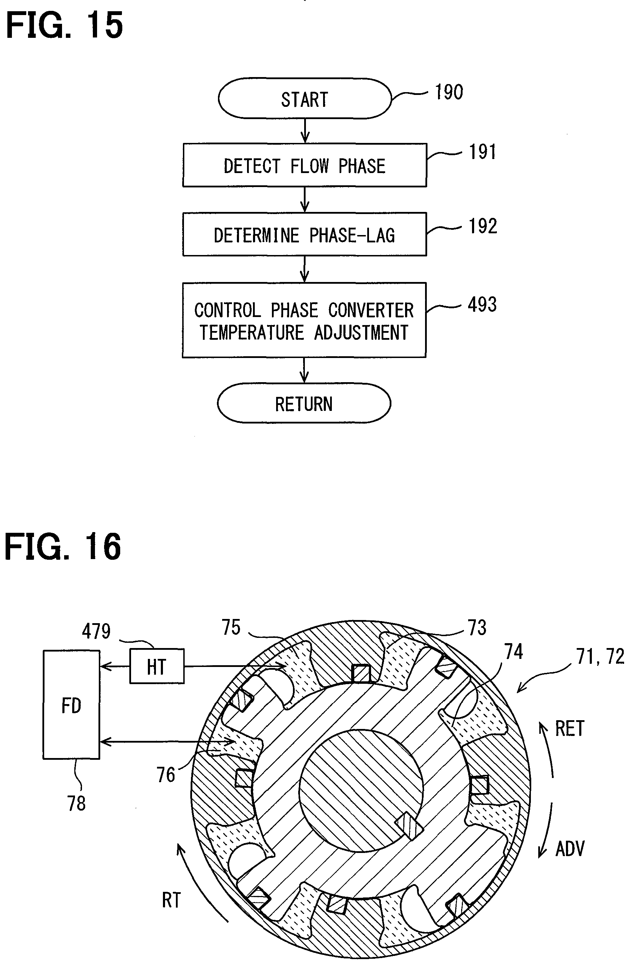

As illustrated in FIG. 15 , in Step 493, the temperature of operation fluid is adjusted so that air bubbles are generated in the operation fluid. The generated air bubbles add a damping function to adjust the phase difference.

As illustrated in FIG. 16, the phase controller 71, 72 has a thermoregulator (HT) 479 which adjusts the temperature of operation fluid. The thermoregulator 479 offers a temperature controller which controls the temperature of operation fluid to produce air bubbles in the capacity chamber 75. The thermoregulator 479 offers an air bubble injector. The gas solubility of operation fluid is known. Therefore, the amount of air bubbles is correctly controllable by the temperature. The thermoregulator 479 is, for example, a heater which heats the heat transport medium.

In this embodiment, the phase controller 71, 72 is rotated in the advance direction ADV to compensate the phase-lag caused by the air bubbles in the heat transport medium. Thereby, the phase difference between the magnetic field modulation device 13 and the heat transport device 14 approaches the target phase difference PHt. According to this embodiment, a desirable phase difference is realizable by comparatively easy structure.

### Fifth embodiment

This embodiment is a modification of the preceding fundamental embodiments. In the above embodiments, the phase controller 71, 72 is disposed between the magnetic field modulation device 13 and the heat transport device 14. Alternatively, the phase difference between the phase of magnetic field change and the phase of both-way flow is adjusted by moving the MCE element 12 in this embodiment.

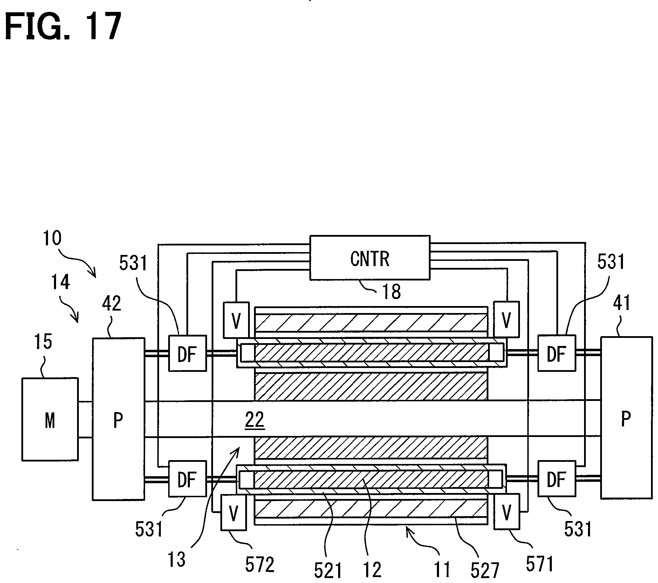

FIG. 17 is a sectional view illustrating the MHP device 11 of the air-conditioner 10 for a vehicle. For easy understanding, illustration of plural components is omitted. For example, a heat exchanger is not illustrated. In this embodiment, the MCE element 12 is housed in the housing 521 that is moveable in the circumferential direction. The housing 521 is movable along the rotational direction of the magnetic field modulation device 13. The housing 521 is also a component which forms a work room. The housing 521 is also a component which offers the container for the MCE element 12. The housing 521 and the MCE element 12 are also called as a bed for taking out the magneto-caloric effect.

The MHP device 11 includes the phase controllers 571 and 572 for moving the housing 521. The phase controller 571, 572 shifts a relative position between the magnetic field modulation device 13 and the MCE element 12. The phase controller 571, 572 is provided by various mechanisms that can move the housing 521. For example, a rotation mechanism, a linear move mechanism, a circular orbit move mechanism, and the like are used. The MHP device 11 includes plural flow sensors 531. The plural flow sensors 531 are positioned at the respective ends of the work room. As a result, a change in the phase of the both-way flow can be detected quickly.

The magnetic field modulation device 13 has a rotor including a permanent magnet and a yoke 527 for letting magnetic flux pass. The magnetic field modulation device 13 periodically fluctuates the magnetic field which acts on the MCE element 12 by rotating the permanent magnet. The phase controller 571, 572 moves the housing 521 and the MCE element 12 simultaneously. Thereby, the timing at which a magnetic field acts on the MCE element 12 is shifted. As a result, the phase changes in the change of magnetic field.

In this embodiment, the MCE element 12 is moved among the adjustable elements in the MHP device 11. Therefore, the phase difference between the phase of magnetic field change and the phase of both-way flow can be adjusted, without being dependent on the magnetic field modulation device 13 and/or the heat transport device 14. The MCE element 12 moves along the rotational direction of the magnetic field modulation device 13. Therefore, it can be said that a variable portion is within the magnetic field modulation device 13. For this reason, even when an inescapable change arises in the phase of both-way flow, a desirable phase difference can be realized as an AMR cycle.

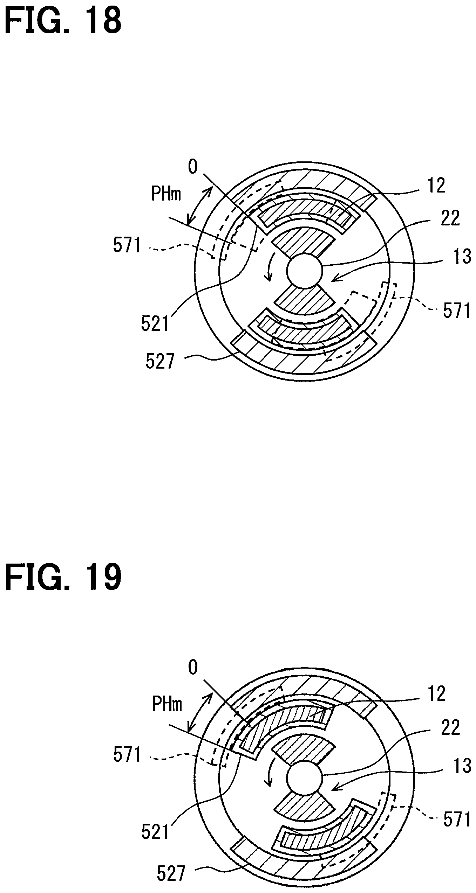

FIG. 18 is a cross-sectional view illustrating the relative spatial relationship between the magnetic field modulation device 13 and the MCE element 12 at a reference position. The bed including the MCE element 12 and the housing 521 is movable within a predetermined range in the rotational direction. When assuming the reference position 0 of the housing 521, the housing 521 can be moved in the advance direction and/or the retard direction. For example, it is assumed that the housing 521 is moved to a retard position illustrated with a dashed line. The phase controller 571, 572 shifts the housing 521 in the rotational direction. In this case, the housing 521 moves by the phase PHm in the rotational direction. The phase PHm is also a phase of the magnetic field change regarding the MCE element 12.

FIG. 19 is a cross-sectional view illustrating the relative spatial relationship when the phase of magnetic field change is delayed. When the magnetic field modulation device 13 is rotated in the arrow direction, the housing 521 moves as illustrated, such that the change in magnetic field which acts on the MCE element 12 is delayed by the phase PHm. In this way, the phase controller 571, 572 changes the phase of magnetic field change. As a result, the phase controller 571, 572 controls the phase difference between the phase of magnetic field change and the phase of both-way flow.

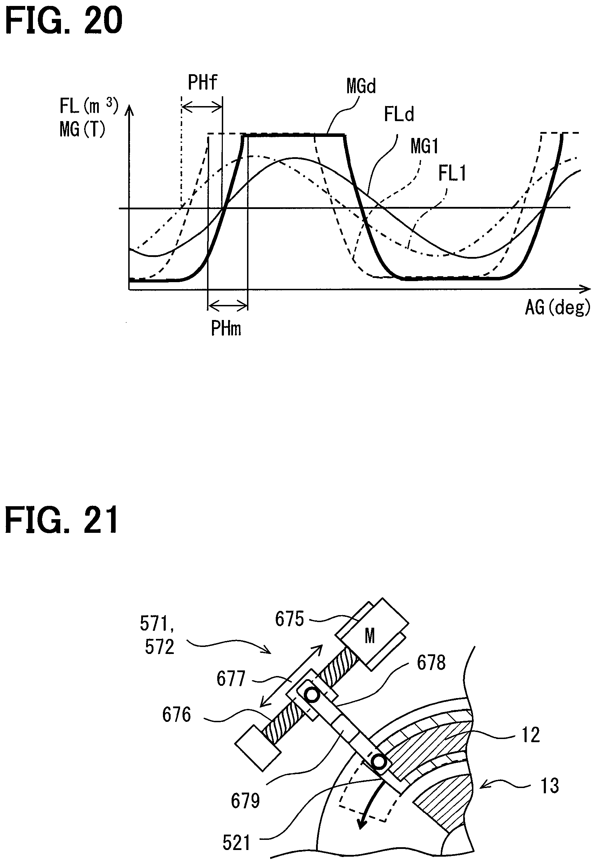

FIG. 20 illustrates the waveform of the magnetic field change MG and the waveform of the both-way flow FL. The dashed line represents a fundamental waveform MG1 of the magnetic field change MG specified by the mechanical structure of the MHP device 11. The magnetic field change MG is delayed by the phase controller 571, 572, as illustrated in a thick solid line which corresponds to a delay waveform MGd delayed by the phase PHm. The single chain line represents a fundamental waveform FL1 of the both-way flow FL specified by the mechanical structure of the MHP device 11. The both-way flow FL may be delayed by the phase PHf, for example, by mixing of air bubbles or partial cavitation, as illustrated in a thin solid line which corresponds to a delay waveform FLd.

The control device 18 acquires the phase difference PHr between the magnetic field phase PHm representing the change in the magnetic field, and the flow phase PHf of the both-way flow. The control device 18 controls the phase controller 571, 572 so that the acquired phase difference PHr becomes close to the desirable target phase difference PHt.

In this embodiment, the magnetic field modulation device 13 modulates the magnetic field which acts on the MCE element 12 and the housing 521 by its own rotation. The MCE element 12 and the housing 521 are movable in the rotational direction only within the predetermined angle range. The movement of the MCE element 12 and the housing 521 means a shift in the relative position between the magnetic field modulation device 13 and the MCE element 12. The phase of magnetic field generated by the magnetic field modulation device 13 to the MCE element 12 changes. The phase of the both-way flow generated by the heat transport device 14 is determined by the mechanical structure or operational status of the device. Therefore, the movement of the MCE element 12 and the housing 521 adjusts the phase difference between the phase of magnetic field change and the phase of both-way flow.

In this embodiment, the control device 18 acquires the phase difference PHr between the magnetic field phase PHm of magnetic field change and the flow phase PHf of both-way flow. The control device 18 controls the phase controller 571, 572 so that the acquired phase difference PHr approaches the desirable target phase difference PHt.

According to this embodiment, the housing 521, i.e., the MCE element 12, is moved in the rotational direction in order to adjust the phase difference between the phase of magnetic field change and the phase of both-way flow. For this reason, the phase difference can be adjusted, without equipping with a phase controller in the rotation shaft 22 which transmits a driving force.

### Sixth embodiment

This embodiment is a modification of the preceding fundamental embodiments. This embodiment describes specific configurations of the phase controller 571, 572. In this embodiment, the phase controller 571, 572 is a screw sending mechanism which is a linear move mechanism.

FIG. 21 illustrates the phase controller 571 (572). The phase controller 571 has a motor 675 as a source of power, and a feed screw 676 driven by the motor 675. The phase controller 571 has a stage 677 having a nut to fit with a screw of the feed screw 676. The stage 677 has an orbit to move linearly along the longitudinal direction of the feed screw 676.

The stage 677 and the housing 521 are connected by a stay 678. The stay 678 is a converter which changes linear movement of the stage 677 into rotation movement of the housing 521. The stay 678 has a strain gauge 679. The strain gauge 679 measures a load generated in the housing 521.

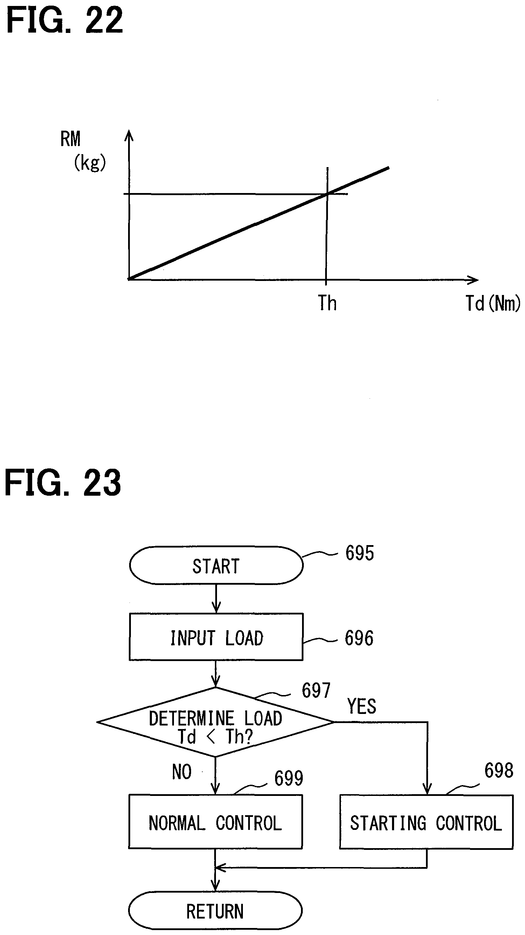

FIG. 22 illustrates a relation between the load Td generated in the housing 521 and an activation amount RM of the MCE element 12. The MCE element 12 is fixed in the housing 521. When the temperature of the MCE element 12 reaches an efficient temperature zone, the MCE element 12 is activated and reacts to the magnetic field of the magnetic field modulation device 13. A torque produced in the MCE element 12 by the magnetic field modulation device 13 appears in the housing 521. Here, the torque produced in the MCE element 12 by the magnetic field modulation device 13 becomes the load Td in the housing 521. The load Td of the housing 521 produces a strain in the stay 678 connected with the housing 521.

In case where the MCE elements 12 are in the cascade connection, the load Td is generated in the housing 521 depending on the quantity of the MCE elements 12 which reached the efficient temperature zone. Therefore, the load Td detected by the strain gauge 679 includes a component representing the activation amount RM of the MCE elements 12 which reached the efficient temperature zone. For example, of the output of the strain gauge 679, an alternating-current component synchronized with rotation of the magnetic field modulation device 13 represents a change in the magnetic field. Of the output of the strain gauge 679, the maximum value of the alternating-current component or the amplitude represents the activation amount RM of the MCE element 12.

The control device 18 detects the activation amount RM of the MCE element 12, i.e., the reaction state, through the strain gauge 679. The reaction state represents the ratio of the activated elements relative to the whole MCE elements 12. The control device 18 switches the control state of the MHP device 11 based on the output of the strain gauge 679 (load Td). Here, a component which represents the activation amount RM is extracted from the output of the strain gauge 679. Specifically, the output of the strain gauge 679 (load Td) is used as an index representing a threshold value Th between a starting control and a normal control.

In FIG. 23, the control device 18 performs a control processing 695. The control device 18 inputs the load Td from the strain gauge 679 in Step 696. The control device 18 determines the load Td in Step 697. Here, the load Td is compared with the threshold value Th. It is determined whether the load Td is less than the threshold value Th. When the load Td is less than the threshold value Th, it progresses to Step 698. When the load Td is not less than the threshold value Th, it progresses to Step 699. When the load Td is less than the threshold value Th, it is determined that the activation amount RM is insufficient for the MHP device 11 to maintain a temperature difference between the high temperature end and the low temperature end. A starting control is performed at Step 698. In the starting control, a control for increasing the activation amount RM of the MCE element 12 is performed. A normal control is performed at Step 699.

According to this embodiment, the phase of magnetic field change can be changed by the phase controller 571 with comparatively easy structure. For this reason, the phase difference between the phase of magnetic field change and the phase of both-way flow can be controlled to a desirable value by detecting the phase of both-way flow with the flow sensor 531. Moreover, the load Td which acts on the housing 521 is used as an index for determining the activation amount RM. The starting control and the normal control can be switched from each other based on the activation amount RM.

### Seventh embodiment

This embodiment is a modification of the preceding fundamental embodiments. This embodiment describes specific configurations of the phase controller 571, 572. In this embodiment, the phase controller 571, 572 is a fluid mechanism which is a linear move mechanism.

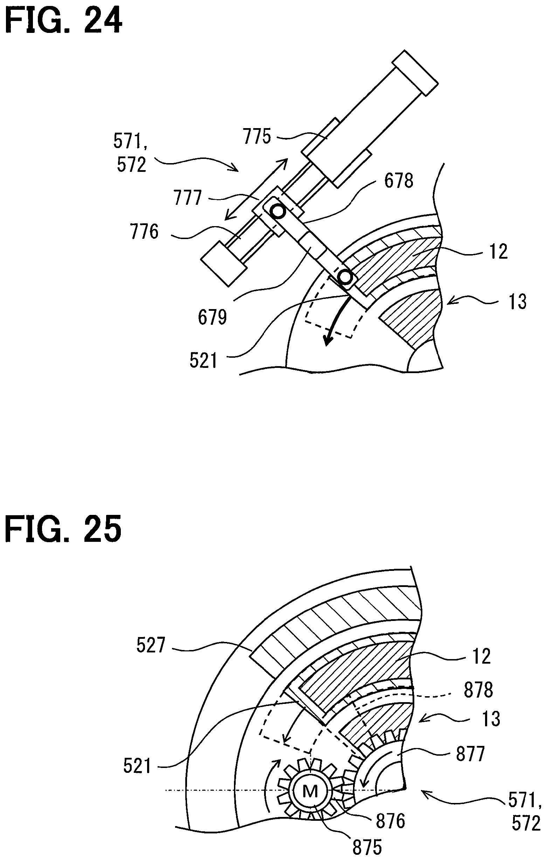

FIG. 24 illustrates the phase controller 571 (572). The phase controller 571 is a fluid mechanism using fluid, such as air or oil, as the source of power. The phase controller 571 has a fluid cylinder 775 and a rod 776. An extension length of the rod 776 is adjusted by the fluid cylinder 775. The phase controller 571 has a stage 777 fixed to the rod 776, and the position of the stage 777 is adjusted with the rod 776. A stay 678 is provided between the stage 777 and the housing 521. The stay 678 has the strain gauge 679. In this embodiment, the same action and effect is acquired as the preceding embodiments.

### Eighth embodiment

This embodiment is a modification of the preceding fundamental embodiments. This embodiment describes specific configurations of the phase controller 571, 572. In this embodiment, the phase controller 571, 572 is a gear mechanism which is a rotation move mechanism.

In FIG. 25, the phase controller 571 (572) has a motor 875 as the source of power, and a first gear 876 directly driven by the motor 875. The phase controller 571 has a second gear 877 that meshes with the first gear 876. The second gear 877 has a stay 878. The second gear 877 is rotated with the stay 878. The stay 878 connects the housing 521 and the second gear 877. The first gear 876, the second gear 877, and the stay 878 offer a rotation move mechanism.

When the motor 875 rotates, the first gear 876 rotates. The second gear 877 also rotates by rotation of the first gear 876. The housing 521 is moved by rotation of the second gear 877. The activation amount RM of the MCE element 12 can be observed as torque for moving the housing 521. Therefore, the activation amount RM can be known by observing the drive torque for the motor 875. In this embodiment, a reaction force torque which acts on the motor 875 is used instead of the load Td in the preceding embodiment. Also in this embodiment, the same action and effect is acquired as the preceding embodiments.

### Ninth embodiment

This embodiment is a modification of the preceding fundamental embodiments. In the preceding embodiments, the flow phase PHf is detected by the flow sensor (FD) 31. The control device 18 acquires the flow phase PHf from the flow sensor 31. Alternatively or additionally in this embodiment, a phase sensor (MD) 933 is used to acquire the reaction phase PHtr.

The MCE element 12 thermally reacts to change in a magnetic field due to the magneto-caloric effect. The MCE element 12 emits or absorbs heat in response to change in a magnetic field. Therefore, the phase of a reaction waveform can be acquired from the emitted or absorbed heat. The phase of this reaction waveform is the reaction phase PHtr. The reaction of the MCE element 12 is delayed by a definite period of time, or by a variable period of time. When the frequency is low in the change of magnetic field, the influence caused by the delay is small. In contrast, when the frequency is high in the change of magnetic field, the influence caused by the delay cannot be disregarded. So, in this embodiment, the reaction phase PHtr including the delay in the reaction of the MCE element 12 is acquired, and the phase of the MHP device 11 is controlled to restrict the influence caused by the delay.

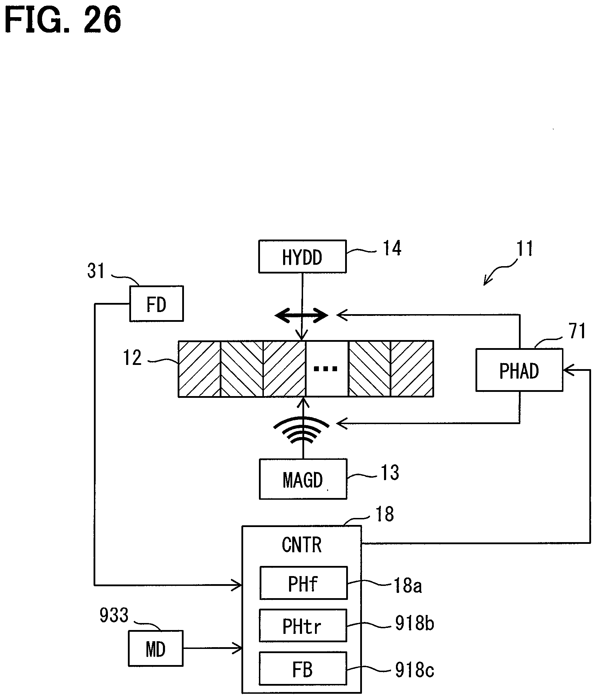

FIG. 26 illustrates a model of the MHP device 11 in this embodiment. The MHP device 11 has the MCE element 12, the magnetic field modulation device (MAGD) 13, the heat transport device (HYDD) 14, the control device (CNTR) 18, and the phase controller (PHAD) 71. The magnetic field modulation device 13 changes the magnetic field which acts on the MCE element 12. The heat transport device 14 produces a flow of work fluid which exchanges heat with the MCE element 12. The control device 18 has the flow phase acquisition part 18a, the reaction phase acquisition part 918b, and the control part 918c. The phase controller 71 adjusts the phases of the magnetic field and the flow to the MCE element 12.

The flow sensor 31 detects the flow of the operation fluid generated by the heat transport device 14. The flow phase acquisition part 18a acquires the flow phase PHf from the flow detected by the flow sensor 31. The flow phase PHf is represented by a difference between the reference position and the flow. The flow phase PHf is represented by a phase difference between a signal detected by the phase sensor 933, and a signal detected by the flow sensor 31.

The phase sensor 933 detects the operation of the magnetic field modulation device 13, the heat transport device 14, or the motor 15. The phase sensor 933 is, for example, a rotation position sensor, a magnetic sensor, or the like. The phase sensor 933 defines the reference position for specifying a phase. The phase sensor 933 is also a reference position sensor.

The reaction phase acquisition part 918b acquires the reaction phase PHtr from the signal detected by the phase sensor 933. The reaction phase acquisition part 918b calculates the reaction phase PHtr to include the delay in change of heat emitted or absorbed in the MCE element 12, which is caused by change of the external magnetic field generated by the magnetic field modulation device 13. The reaction phase PHtr is able to be calculated based the phase assumed from the mechanical configuration and the reaction delay of the MCE element 12.

When the MCE element 12 produces the reaction delay with a definite period of time, the reaction phase acquisition part 918b calculates the reaction phase PHtr by adding the reaction delay of the MCE element 12 to the reference position detected by the phase sensor 933. The MCE element 12 may produce a reaction delay with a fixed period of time. The MCE element 12 may produce a reaction delay with a variable period of time. In this case, the reaction phase acquisition part 918b calculates the reaction phase PHtr based on the reference position detected by the phase sensor 933, and the reaction delay with the variable period of time.

The reaction delay of the variable period of time changes with at least one of parameters such as environmental temperature, pressure, and regular load. The reaction phase acquisition part 918b calculates the reaction delay of the variable period of time according to at least one parameter. In this case, the reaction phase PHtr is calculated from the reference position detected by the phase sensor 933, and the calculated delay of the variable period of time.

The control part (FB) 918c controls the phase controller (PHAD) 71 such that the relation between the flow phase PHf and the reaction phase PHtr approaches a target relation. The control part 918c carries out, for example, feedback control of the phase controller 71. The control part 918c, for example, calculates the phase difference between the flow phase PHf and the reaction phase PHtr, and the calculated phase difference is made to approach and equal to a target phase difference. The control part 918c, for example, controls the phase controller 71 to make the phase difference between the flow phase PHf and the reaction phase PHtr to be equal to zero (0). The control part 918c can use various control methods, such as proportional integral control, proportional integral differential control, and optimal regulator control.

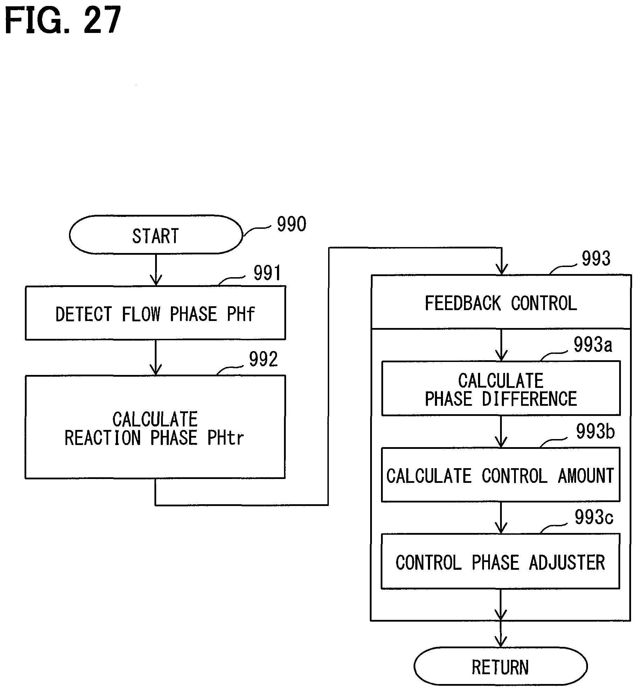

FIG. 27 illustrates a flow chart representing operations in this embodiment. When the MHP device 11 shifts from a halt condition to an operational status, the control device 18 executes the phase control processing 990.

At Step 991, the control device 18 detects the flow phase PHf. The flow phase PHf is detected from the flow sensor 31.

At Step 992, the control device 18 calculates the reaction phase PHtr. The control device 18 calculates the reaction phase PHtr based on the reference position detected by the phase sensor 933 and at least one parameter. When the parameter is an outside air temperature Tam, the reaction phase PHtr can be calculated based on the reference position and the function f (Tam) that can be experimentally determined.

At Step 993, the control device 18 carries out feedback control of the phase controller 71. Step 993 can include at least proportional control. In this case, Step 993 includes Step 993a to calculate the phase difference, Step 993b to calculate the control amount, and Step 993c to control the phase controller 71. At Step 993b, the control amount proportional to the phase difference is calculated.

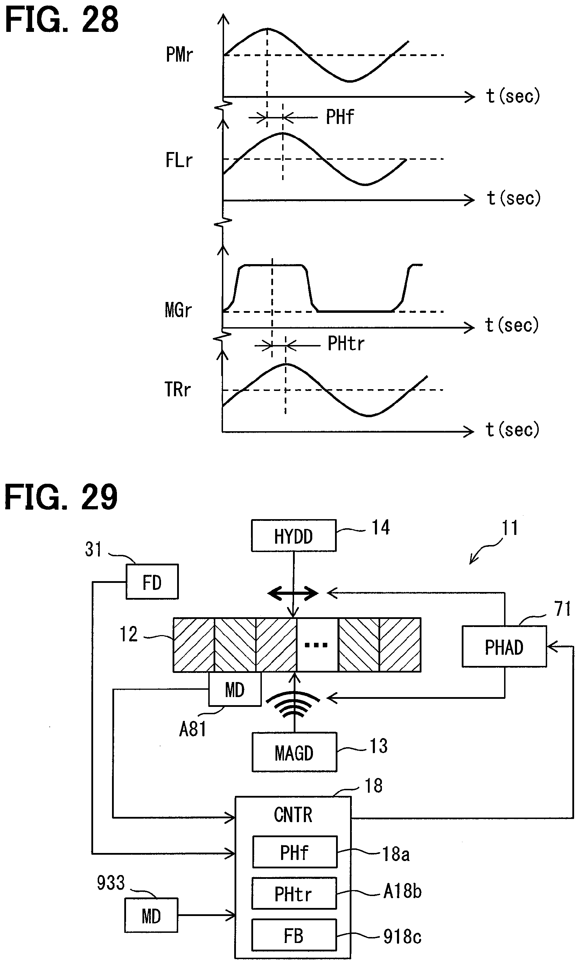

FIG. 28 illustrates waveforms relevant to the magnetic field modulation device 13 and the heat transport device 14. In FIG. 28, for easy understanding, each of the flow velocity and the reaction of the MCE element 12 is simplified into a shape of a sine wave. The operation of the pump which offers the heat transport device 14 is represented by a pump waveform PMr. An actual flow is represented by a flow waveform FLr. The flow waveform FLr is behind the pump waveform PMr by the flow phase PHf. A timing when it is observed that the flow waveform FLr has the local maximum value is behind a timing when the pump waveform PMr has the maximum flow velocity by the flow phase PHf. The operation of the magnetic field modulation device 13 is represented by a magnetic field waveform MGr. The magneto-caloric effect of the MCE element 12 is represented by a thermal waveform TRr. The thermal waveform TRr represents the heat emission/absorption reaction in the MCE element 12, that is caused by change in the external magnetic field generated by the magnetic field modulation device 13. The reaction of the MCE element 12 is behind the change in the magnetic field by the reaction phase PHtr. A timing when it is observed that the thermal waveform TRr has the local maximum value is behind a timing when the magnetic field waveform MGr provides the maximum magnetic field by the reaction phase PHtr.

In this embodiment, the phase controller 71 is controlled so that the timing when it is observed that the flow waveform FLr has the local maximum value, and the timing when it is observed that the thermal waveform TRr has the local maximum value are in a target relation. The target relation is beforehand set up so that the operation efficiency of the MHP device 11 becomes high. For example, the phase controller 71 is controlled so that the timing when it is observed that the flow waveform FLr has the local maximum value, and the timing when it is observed that the thermal waveform TRr has the local maximum value become the same as each other. Alternatively, the target relation may be set such that the flow waveform FLr precedes a little from the thermal waveform TRr as a phase difference. Moreover, the target relation may be set such that the flow waveform FLr is a little behind the thermal waveform TRr as a phase difference. The target relation can be set up according to the mechanical configuration of the MHP device 11.

According to this embodiment, the bad influence resulting from the delay in the thermal waveform TRr can be restricted. For example, even if the delay in the thermal waveform TRr changes, the output of the MHP device 11 can be restricted from changing. For example, even if the delay in the thermal waveform TRr changes, the MHP device 11 can be operated at high efficiency.

Furthermore, in this embodiment, the reaction phase PHtr equivalent to the delay of the thermal waveform TRr is calculated. Thereby, a comparatively easy device is employable.

According to this embodiment, both of the bad influence resulting from the delay in the flow waveform FLr and the bad influence resulting from the delay in the thermal waveform TRr are inhibited. The output of the MHP device 11 can be restricted from changing even if the delay in the flow waveform FLr or the delay in the thermal waveform TRr changes. The MHP device 11 can be operated at high efficiency even if the delay in the flow waveform FLr or the delay in the thermal waveform TRr changes.

### Tenth embodiment

This embodiment is a modification of the preceding fundamental embodiments. The reaction phase PHtr is calculated in the preceding embodiments. Alternatively, the reaction phase PHtr is detected in this embodiment.

FIG. 29 illustrates a model of the MHP device 11 in this embodiment. The MHP device 11 includes a reaction sensor A81 which detects the reaction of the MCE element 12, namely, which directly detects a change caused by the magneto-caloric effect. The reaction sensor A81 observes the thermal waveform TRr of heat emitted/absorbed in the MCE element 12, which is changed by the external magnetic field generated by the magnetic field modulation device 13. The reaction sensor A81 observes the temperature change of the MCE element 12. The reaction sensor A81 detects the temperature change of the MCE element 12 resulting from its own magneto-caloric effect. The reaction sensor A81 is provided by a temperature sensor. The reaction sensor A81 may be a temperature sensor disposed on the surface of the MCE element 12. The reaction sensor A81 may be various sensors, such as a sensor simulating the magneto-caloric effect of the MCE element 12, or a sensor which detects change in the magnetic permeability.

The reaction sensor A81 is located to detect the temperature of one portion or of plural portions of the MCE element 12. The reaction sensor A81 is located to detect the temperature of a portion which firstly demonstrates the magneto-caloric effect after the MHP device 11 is started. Thereby, the phase control can be started from the first stage immediately after the MHP device 11 is started.

The reaction phase acquisition part A18b acquires the reaction phase PHtr from the signal detected by the phase sensor 933 and the signal detected by the reaction sensor A81. The reaction phase acquisition part A18b detects the reaction phase PHtr to include the delay in the reaction of the MCE element 12 to a change in the magnetic field. The reaction phase PHtr is represented by the delay in the thermal waveform TRr from the reference position, in this embodiment.

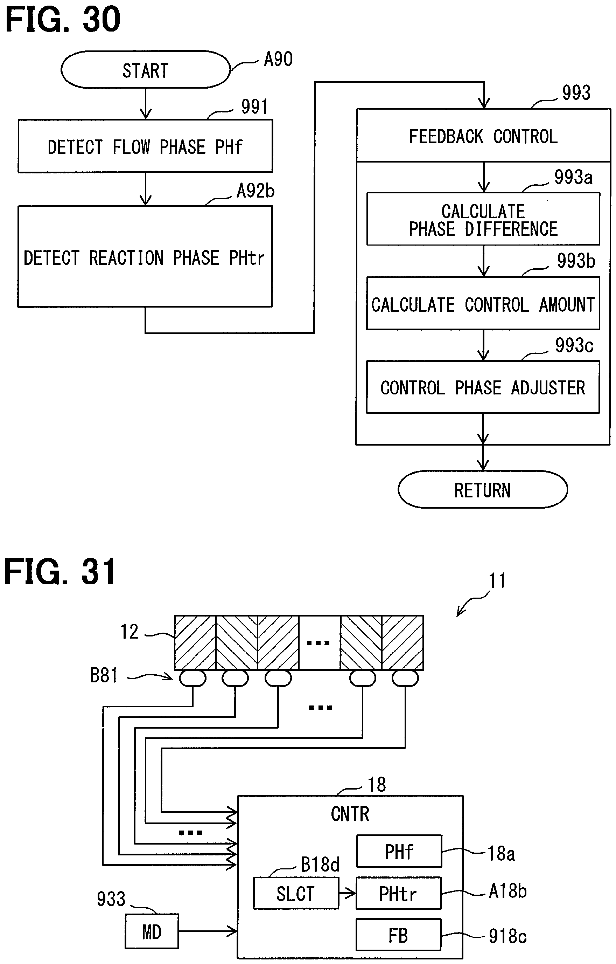

FIG. 30 is a flow chart for explaining operations in this embodiment. When the MHP device 11 shifts from a halt condition to an operational status, the control device 18 executes the phase control processing A90. At Step A92b, the control device 18 detects the reaction phase PHtr. For this reason, the exact reaction phase PHtr which suited the actual operation state can be acquired. For example, even when there is a disturbance magnetic field in the environment where the MHP device 11 was installed, even when the MCE element 12 deteriorates, or even when there is other disturbance, the exact reaction phase PHtr is acquired.

In this embodiment, the reaction phase PHtr equivalent to the delay in the thermal waveform TRr can be directly detected. Thereby, the phase can be accurately controlled.

### Eleventh embodiment

This embodiment is a modification of the preceding fundamental embodiments. One reaction sensor A81 is used in the preceding embodiment. Alternatively, in this embodiment, in order to detect the reaction phase PHtr, plural reaction sensors B81 are used.

FIG. 31 illustrates a model of the MHP device 11 in this embodiment. The MCE element 12 has plural portions which are in cascade connection. The plural portions have curie temperatures different from each other. The plural portions are in cascade connection to share a load temperature difference between a high temperature end and a low temperature end. When the MHP device 11 is started from an initial environmental temperature, a part of the plural portions demonstrates a magneto-caloric effect first. The portion that reacts firstly is dependent on the initial environmental temperature. For example, when the initial environmental temperature is low, a portion near the low temperature end reacts firstly. For example, when the initial environmental temperature is high, a portion near the high temperature end reacts firstly.

The MCE element 12 has plural reaction sensors B81 respectively corresponding to the plural portions. One of the reaction sensors B81 detects the temperature of one portion. The detection signals of the reaction sensors B81 are inputted into the control device 18. The detection signals are used in order to detect the reaction phase PHtr.

The detection signals are inputted into a selection unit B18d. The selection unit B18d selects the detection signal which reacts firstly. The selected detection signal represents the phase of the element portion which reacted firstly. Therefore, the selected detection signal is inputted into the reaction phase acquisition part A18b. The reaction phase acquisition part A18b acquires the reaction phase PHtr. The other configuration and the operation after the reaction phase PHtr was acquired can be referred to the other embodiment.

According to this embodiment, the selected element portion is different between when the initial environmental temperature is low, and when the initial environmental temperature is high. Therefore, even if the initial environmental temperature changes, the reaction phase PHtr can be detectable from an early stage. Furthermore, the phase control can be started at an early stage according to the reaction phase PHtr.

### Other embodiment

The disclosure in this description is not restricted to the illustrated embodiment. The disclosure includes the illustrated embodiments and modifications by a person skilled in the art within the scope of the claims.

In the embodiments, the multi-cylinder pump is provided by the slanting board type pump. Alternatively, the other capacity type pump may be used. Moreover, the heat transport device 14 may be a separate device not driven by the motor 15. Moreover, in the first embodiment, one work room 26 is arranged to correspond to one cylinder of a pump. Alternatively, plural cylinders may correspond to one work room, one cylinder may correspond to plural work rooms, or plural cylinders may correspond to plural work rooms.

The air-conditioner 10 is provided in the embodiments. Alternatively, an air-conditioner for residences may be provided. Moreover, a device which heats or cools water may be provided, such as hot-water supply device or a water cooling machine. Moreover, the MHP device 11 uses outside air as main heat source. Alternatively, other heat source such as water or ground may be used as a main heat source.

In the embodiments, the MHP device 11 is provided as a thermomagnetic cycle device. Alternatively, a thermomagnetic engine device may be provided as a thermomagnetic cycle device. For example, a thermomagnetic engine device can be provided by adjusting phases between the magnetic field change and the flow of heat transport medium in the MHP device 11 of the embodiment.

In the embodiments, the vane type phase controller 71, 72 is used. Alternatively, it is possible to use various phase controllers. For example, a phase controller using engagement of helical gears or a phase controller using a planetary gear mechanism can be used. In the embodiments, the capacity adjustment type phase controller 71, 72 using operation fluid is used. Alternatively, a phase controller which adjusts a phase difference using a clutch mechanism may be used, which controls a rotation angle of an electric motor, or a torque transfer.

The single motor 15 is used in the embodiments. Alternatively, a motor for the magnetic field modulation device 13 and a motor for the heat transport device 14 may be adopted. In this case, the phase difference between the phase of magnetic field change and the phase of both-way flow can be adjusted by adjusting the rotation phase of the two motors. In this case, a phase control part is provided by the two motors and a control circuit which controls the two motors.

In the embodiments, the flow sensor 31, 32, 531 observes the float 37 as an optical sensor. Alternatively, the float 37 may be observed using various sensors such as ultrasonic sensor, magnetic sensor, and mechanical contact switch. Moreover, the flow sensor 31, 32, 531 observes the float 37. Alternatively, the flow sensor 31, 32, 531 may observe the air bubbles produced in the heat transport medium. Moreover, the flow sensor 31, 32, 531 can be provided using various detection principles, such as pressure sensor, Karman vortex sensor, and heat ray sensor.

The flow sensor 31, 32, 531 can be provided by a sensor which detects, for example, pressure of a heat transport medium. The pressure of a heat transport medium represents the state of a both-way flow, i.e., the waveform of the both-way flow. The flow sensor 31, 32, 531 can be provided by a sensor which detects, for example, temperature of a heat transport medium. In the AMR cycle, the temperature of a heat transport medium represents the state of a both-way flow, i.e., the waveform of the both-way flow. For this reason, the waveform of a both-way flow is detected by an easy temperature sensor.

The phase of magnetic field change is specified by the mechanical configuration of the MHP device 11 in the embodiments. Alternatively, a sensor may detect the phase of magnetic field change. For example, of the torque which appears in the housing 521, the alternating-current component represents the magnetic field change. For this reason, the phase of magnetic field change may be detected based on the alternating-current component in the output of the strain gauge 679.

Alternative to the embodiment, the flow phase may be detected based on the capability of the MHP device 11. For example, the phase controller 71, 72 can be exploratively controlled so that the capability of the MHP device 11 becomes the maximum. In this case, at the same time when the phase difference between the magnetic field phase and the flow phase is acquired, the control is executed to make the acquisition phase difference to approach a target phase difference. Therefore, a part which acquires the phase difference between the magnetic field phase and the flow phase is included.

Moreover, the flow phase may be detected from a work load for driving the magnetic field modulation device 13. For example, a torque sensor or a strain gauge can be used, which detects the torque for rotating the magnetic field modulation device 13, i.e., the rotor core 24. The work load is changed by the phase difference between the magnetic field phase and the flow phase. Therefore, the phase difference can be observed based on the output from the torque sensor or the strain gauge. In this case, it can be said that a part which acquires the phase difference between the magnetic field phase and the flow phase is included.

## Claims

1. A thermomagnetic cycle device comprising:
a magneto-caloric element (12) that emits or absorbs heat depending on an intensity of an external magnetic field;
a magnetic field modulation device (13) that modulates the external magnetic field applied to the magneto-caloric element;
a heat transport device (14) that generates a both-way flow of heat transport medium that exchanges heat with the magneto-caloric element so that a high temperature end and a low temperature end are generated in the magneto-caloric element;
a phase controller (71, 72, 571, 572) that adjusts a phase difference between a magnetic field phase representing change in the external magnetic field generated by the magnetic field modulation device and a flow phase of the both-way flow generated by the heat transport device; and
a control device (18) that controls the phase controller, wherein the control device includes
a phase acquisition part (18a, 918b, A18b) that acquires the flow phase (PHf) of the both-way flow of the heat transport medium or a reaction phase (PHtr) representing change in the heat emitted or absorbed by the magneto-caloric element, and **characterized in that** the thermomagnetic cycle device further comprises:
a control part (18c, 918c) that controls the phase controller based on the flow phase or the reaction phase,
wherein the phase controller is disposed between the magnetic field modulation device and the heat transport device, and controls the phase difference in a mechanical interlocking relation between the magnetic field modulation device and the heat transport device,
wherein the phase controller is configured to correspond to an advance direction (ADV) and a retard direction (RET), and has a component (73, 74) that defines a plurality of capacity chambers (75, 76) in which operation fluid is arranged
and wherein the control part controls the phase difference by controlling a ratio of volume between the plurality of capacity chambers.

2. A thermomagnetic cycle device comprising:
a magneto-caloric element (12) that emits or absorbs heat depending on an intensity of an external magnetic field;
a magnetic field modulation device (13) that modulates the external magnetic field applied to the magneto-caloric element;
a heat transport device (14) that generates a both-way flow of heat transport medium that exchanges heat with the magneto-caloric element so that a high temperature end and a low temperature end are generated in the magneto-caloric element;
a phase controller (71, 72, 571, 572) that adjusts a phase difference between a magnetic field phase representing change in the external magnetic field generated by the magnetic field modulation device and a flow phase of the both-way flow generated by the heat transport device; and
a control device (18) that controls the phase controller, wherein the control device includes
a phase acquisition part (18a, 918b, A18b) that acquires the flow phase (PHf) of the both-way flow of the heat transport medium or a reaction phase (PHtr) representing change in the heat emitted or absorbed by the magneto-caloric element, and **characterized in that** the thermomagnetic cycle device further comprises:
a control part (18c, 918c) that controls the phase controller based on the flow phase or the reaction phase,
wherein the phase controller is disposed between the magnetic field modulation device and the heat transport device, and controls the phase difference in a mechanical interlocking relation between the magnetic field modulation device and the heat transport device,
wherein the phase controller is configured to correspond to an advance direction (ADV) and a retard direction (RET), and has a component (73, 74) that defines a plurality of capacity chambers (75, 76) in which operation fluid is arranged
and wherein the control part controls the phase difference by providing a damping function to the phase controller.

3. A thermomagnetic cycle device comprising:
a magneto-caloric element (12) that emits or absorbs heat depending on an intensity of an external magnetic field;
a magnetic field modulation device (13) that modulates the external magnetic field applied to the magneto-caloric element;
a heat transport device (14) that generates a both-way flow of heat transport medium that exchanges heat with the magneto-caloric element so that a high temperature end and a low temperature end are generated in the magneto-caloric element;
a phase controller (71, 72, 571, 572) that adjusts a phase difference between a magnetic field phase representing change in the external magnetic field generated by the magnetic field modulation device and a flow phase of the both-way flow generated by the heat transport device; and
a control device (18) that controls the phase controller, wherein the control device includes
a phase acquisition part (18a, 918b, A18b) that acquires the flow phase (PHf) of the both-way flow of the heat transport medium or a reaction phase (PHtr) representing change in the heat emitted or absorbed by the magneto-caloric element, and **characterized in that** the thermomagnetic cycle device further comprises:
a control part (18c, 918c) that controls the phase controller based on the flow phase or the reaction phase,
and wherein the phase controller (571, 572) shifts a relative position between the magnetic field modulation device and the magneto-caloric element.

4. The thermomagnetic cycle device according to anyone of claim 1 to 3, wherein
the control device includes a phase difference acquisition part (18b) that acquires a phase difference between the magnetic field phase and the flow phase,
the phase acquisition part (18a) acquires the flow phase,
the control part (18c) controls the phase controller so that an acquisition phase difference (PHr) acquired by the phase difference acquisition part approaches a target phase difference (PHt),
the target phase difference is a delay phase difference by which the flow phase is delayed from the magnetic field phase, and
the acquisition phase difference is a delay phase difference that is further delayed than the target phase difference.

5. The thermomagnetic cycle device according to claim 4, wherein
the control part acquires the phase difference between the magnetic field phase and the flow phase as the acquisition phase difference, and controls the phase controller to reduce an error phase difference (PHe) between the acquisition phase difference and the target phase difference.

6. The thermomagnetic cycle device according to claim 4 or claim 5, wherein the control part controls the acquisition phase difference within a target range (PHp) including the target phase difference.

7. The thermomagnetic cycle device according to claim 2, further comprising: an air bubble provider (379, 479) that provides the dumping function by injecting air bubbles into the capacity chamber, wherein
the control part controls the phase difference by controlling the air bubble provider.

8. The thermomagnetic cycle device according to claim 7, wherein
the operation fluid has a known gas solubility, and
the air bubble provider has a thermoregulator that controls a temperature of the operation fluid to inject air bubbles into the capacity chamber.

9. The thermomagnetic cycle device according to claim 3, wherein
the phase controller is configured to move the magneto-caloric element.

10. The thermomagnetic cycle device according to any one of claims 1 to 9, wherein
the phase acquisition part includes a flow phase acquisition part (18a) that acquires the flow phase of the both-way flow of the heat transport medium,
the phase acquisition part further includes a phase determining part (18b) that acquires the phase difference between the magnetic field phase and the flow phase as an acquisition phase difference, and
the control part (18c) controls the phase controller so that the acquisition phase difference (PHr) approaches a target phase difference (PHt).

11. The thermomagnetic cycle device according to claim 10, further comprising: a flow sensor (31, 32, 531) that observes the both-way flow of the heat transport medium, wherein
the flow phase acquisition part detects the flow phase based on an output of the flow sensor.

12. The thermomagnetic cycle device according to claim 10 further comprising: a sensor (35, 36) that observes a state of the heat transport medium, wherein the flow phase acquisition part presumes the flow phase based on an output of the sensor.

13. The thermomagnetic cycle device according to any one of claims 1 to 12, wherein the phase controller controls the phase difference so that the magneto-caloric element is able to have high ability as an AMR cycle.

14. A thermomagnetic cycle device comprising:
a magneto-caloric element (12) that emits or absorbs heat depending on an intensity of an external magnetic field;
a magnetic field modulation device (13) that modulates the external magnetic field applied to the magneto-caloric element;
a heat transport device (14) that generates a both-way flow of heat transport medium that exchanges heat with the magneto-caloric element so that a high temperature end and a low temperature end are generated in the magneto-caloric element; and **characterized in that** the thermomagnetic cycle device further comprises:
a phase controller (571, 572) that adjusts a phase difference between a magnetic field phase representing change in the external magnetic field generated by the magnetic field modulation device and a flow phase of the both-way flow generated by the heat transport device by shifting a relative position between the magnetic field modulation device and the magneto-caloric element.

15. The thermomagnetic cycle device according to claim 14, wherein the phase controller is configured to move the magneto-caloric element.

## Patentansprüche

1. Thermomagnetische Kreislaufvorrichtung umfassend:
ein magnetokalorisches Element (12), das in Abhängigkeit von der Stärke eines externen Magnetfelds Wärme abgibt oder absorbiert;
eine Magnetfeldmodulationsvorrichtung (13), die das an das magnetokalorische Element angelegte externe Magnetfeld moduliert;
eine Wärmetransportvorrichtung (14), die eine Zweiwege-Strömung eines Wärmetransportmediums erzeugt, die Wärme mit dem magnetokalorischen Element austauscht, so dass ein Hochtemperaturende und ein Niedrigtemperaturende in dem magnetokalorischen Element erzeugt werden;
einen Phasenregler (71, 72, 571, 572), der eine Phasendifferenz zwischen einer Magnetfeldphase, die eine Änderung des von der Magnetfeldmodulationsvorrichtung erzeugten externen Magnetfelds darstellt, und einer Strömungsphase der von der Wärmetransportvorrichtung erzeugten Zweiwege-Strömung einstellt; und
eine Steuervorrichtung (18), die den Phasenregler steuert, wobei die Steuervorrichtung Folgendes umfasst
einen Phasenerfassungsteil (18a, 918b, A18b), der die Strömungsphase (PHf) der Zweiwege-Strömung des Wärmetransportmediums oder eine Reaktionsphase (PHtr) erfasst, die eine Änderung der von dem magnetokalorischen Element abgegebenen oder absorbierten Wärme darstellt,
und **dadurch gekennzeichnet ist, dass** die thermomagnetische Kreislaufvorrichtung ferner umfasst:
einen Steuerteil (18c, 918c), der den Phasenregler basierend auf der Strömungsphase oder der Reaktionsphase steuert,
wobei der Phasenregler zwischen der Magnetfeldmodulationsvorrichtung und der Wärmetransportvorrichtung angeordnet ist und die Phasendifferenz in einer mechanischen Verriegelungsbeziehung zwischen der Magnetfeldmodulationsvorrichtung und der Wärmetransportvorrichtung steuert,
wobei der Phasenregler so konfiguriert ist, dass er einer Vorschubrichtung (ADV) und einer Rückzugsrichtung (RET) entspricht, und eine Komponente (73, 74) aufweist, die eine Vielzahl von Kapazitätskammern (75, 76) definiert, in denen Betriebsfluid angeordnet ist,
und wobei der Steuerteil die Phasendifferenz steuert, indem er ein Volumenverhältnis zwischen der Vielzahl von Kapazitätskammern steuert.

2. Thermomagnetische Kreislaufvorrichtung umfassend:
ein magnetokalorisches Element (12), das in Abhängigkeit von der Stärke eines externen Magnetfelds Wärme abgibt oder absorbiert;
eine Magnetfeldmodulationsvorrichtung (13), die das an das magnetokalorische Element angelegte externe Magnetfeld moduliert;
eine Wärmetransportvorrichtung (14), die eine Zweiwege-Strömung eines Wärmetransportmediums erzeugt, die Wärme mit dem magnetokalorischen Element austauscht, so dass ein Hochtemperaturende und ein Niedrigtemperaturende in dem magnetokalorischen Element erzeugt werden;
einen Phasenregler (71, 72, 571, 572), der eine Phasendifferenz zwischen einer Magnetfeldphase, die eine Änderung des von der Magnetfeldmodulationsvorrichtung erzeugten externen Magnetfelds darstellt, und einer Strömungsphase der von der Wärmetransportvorrichtung erzeugten Zweiwege-Strömung einstellt; und
eine Steuervorrichtung (18), die den Phasenregler steuert, wobei die Steuervorrichtung Folgendes umfasst
einen Phasenerfassungsteil (18a, 918b, A18b), der die Strömungsphase (PHf) der Zweiwege-Strömung des Wärmetransportmediums oder eine Reaktionsphase (PHtr) erfasst, die eine Änderung der von dem magnetokalorischen Element abgegebenen oder absorbierten Wärme darstellt, und **dadurch gekennzeichnet ist, dass** die thermomagnetische Kreislaufvorrichtung ferner umfasst:
einen Steuerteil (18c, 918c), der den Phasenregler basierend auf der Strömungsphase oder der Reaktionsphase steuert,
wobei der Phasenregler zwischen der Magnetfeldmodulationsvorrichtung und der Wärmetransportvorrichtung angeordnet ist und die Phasendifferenz in einer mechanischen Verriegelungsbeziehung zwischen der Magnetfeldmodulationsvorrichtung und der Wärmetransportvorrichtung steuert,
wobei der Phasenregler so konfiguriert ist, dass er einer Vorschubrichtung (ADV) und einer Rückzugsrichtung (RET) entspricht, und eine Komponente (73, 74) aufweist, die eine Vielzahl von Kapazitätskammern (75, 76) definiert, in denen Betriebsfluid angeordnet ist,
und wobei der Steuerteil die Phasendifferenz steuert, indem er dem Phasenregler eine Dämpfungsfunktion bereitstellt.

3. Thermomagnetische Kreislaufvorrichtung umfassend:
ein magnetokalorisches Element (12), das in Abhängigkeit von der Stärke eines externen Magnetfelds Wärme abgibt oder absorbiert;
eine Magnetfeldmodulationsvorrichtung (13), die das an das magnetokalorische Element angelegte externe Magnetfeld moduliert;
eine Wärmetransportvorrichtung (14), die eine Zweiwege-Strömung eines Wärmetransportmediums erzeugt, die Wärme mit dem magnetokalorischen Element austauscht, so dass ein Hochtemperaturende und ein Niedrigtemperaturende in dem magnetokalorischen Element erzeugt werden;
einen Phasenregler (71, 72, 571, 572), der eine Phasendifferenz zwischen einer Magnetfeldphase, die eine Änderung des von der Magnetfeldmodulationsvorrichtung erzeugten externen Magnetfelds darstellt, und einer Strömungsphase der von der Wärmetransportvorrichtung erzeugten Zweiwege-Strömung einstellt; und
eine Steuervorrichtung (18), die den Phasenregler steuert, wobei die Steuervorrichtung Folgendes umfasst
einen Phasenerfassungsteil (18a, 918b, A18b), der die Strömungsphase (PHf) der Zweiwege-Strömung des Wärmetransportmediums oder eine Reaktionsphase (PHtr) erfasst, die eine Änderung der von dem magnetokalorischen Element abgegebenen oder absorbierten Wärme darstellt, und **dadurch gekennzeichnet ist, dass** die thermomagnetische Kreislaufvorrichtung ferner umfasst:
einen Steuerteil (18c, 918c), der den Phasenregler basierend auf der Strömungsphase oder der Reaktionsphase steuert,
und wobei der Phasenregler (571, 572) eine relative Position zwischen der Magnetfeldmodulationsvorrichtung und dem magnetokalorischen Element verschiebt.

4. Thermomagnetische Kreislaufvorrichtung nach einem der Ansprüche 1 bis 3, wobei
die Steuervorrichtung einen Phasendifferenzerfassungsteil (18b) einschließt, der eine Phasendifferenz zwischen der Magnetfeldphase und der Strömungsphase erfasst,
der Phasenerfassungsteil (18a) die Strömungsphase erfasst,
der Steuerteil (18c) den Phasenregler so steuert, dass sich eine durch den Phasendifferenzerfassungsteil erfasste Erfassungsphasendifferenz (PHr) einer Zielphasendifferenz (PHt) annähert,
die Zielphasendifferenz eine Verzögerungsphasendifferenz ist, um die die Strömungsphase gegenüber der Magnetfeldphase verzögert ist, und
die Erfassungsphasendifferenz eine Verzögerungsphasendifferenz ist, die weiter verzögert ist als die Zielphasendifferenz.

5. Thermomagnetische Kreislaufvorrichtung nach Anspruch 4, wobei
der Steuerteil die Phasendifferenz zwischen der Magnetfeldphase und der Strömungsphase als die Erfassungsphasendifferenz erfasst und den Phasenregler steuert, um eine Fehlerphasendifferenz (PHe) zwischen der Erfassungsphasendifferenz und der Zielphasendifferenz zu verringern.

6. Thermomagnetische Kreislaufvorrichtung nach Anspruch 4 oder Anspruch 5, wobei der Steuerteil die Erfassungsphasendifferenz innerhalb eines Zielbereichs (PHp) steuert, der die Zielphasendifferenz einschließt.

7. Thermomagnetische Kreislaufvorrichtung nach Anspruch 2, ferner umfassend: einen Luftblasenlieferanten (379, 479), der die Entleerungsfunktion durch Einblasen von Luftblasen in die Kapazitätskammer bereitstellt, wobei
der Steuerteil die Phasendifferenz durch Steuern des Luftblasenlieferanten steuert.

8. Thermomagnetische Kreislaufvorrichtung nach Anspruch 7, wobei
das Betriebsfluid eine bekannte Gaslöslichkeit aufweist, und
der Luftblasenlieferant einen Thermoregler aufweist, der die Temperatur des Betriebsfluids steuert, um Luftblasen in die Kapazitätskammer zu injizieren.

9. Thermomagnetische Kreislaufvorrichtung nach Anspruch 3, wobei der Phasenregler so konfiguriert ist, dass er das magnetokalorische Element bewegt.

10. Thermomagnetische Kreislaufvorrichtung nach einem der Ansprüche 1 bis 9, wobei
der Phasenerfassungsteil einen Strömungsphasenerfassungsteil (18a) einschließt, der die Strömungsphase der Zweiwege-Strömung des Wärmetransportmediums erfasst,
der Phasenerfassungsteil ferner einen Phasenbestimmungsteil (18b) einschließt, der die Phasendifferenz zwischen der Magnetfeldphase und der Strömungsphase als eine Erfassungsphasendifferenz erfasst, und
der Steuerteil (18c) den Phasenregler so steuert, dass sich die Erfassungsphasendifferenz (PHr) einer Zielphasendifferenz (PHt) annähert.

11. Thermomagnetische Kreislaufvorrichtung nach Anspruch 10, ferner umfassend: einen Durchflusssensor (31, 32, 531), der die Zweiwege-Strömung des Wärmetransportmediums beobachtet, wobei
der Durchflussphasenerfassungsteil die Durchflussphase basierend auf einer Ausgabe des Durchflusssensors erfasst.

12. Thermomagnetische Kreislaufvorrichtung nach Anspruch 10, ferner umfassend: einen Sensor (35, 36), der einen Zustand des Wärmetransportmediums beobachtet, wobei der Strömungsphasenerfassungsteil die Strömungsphase basierend auf einer Ausgabe des Sensors annimmt.

13. Thermomagnetische Kreislaufvorrichtung nach einem der Ansprüche 1 bis 12, wobei der Phasenregler die Phasendifferenz so steuert, dass das magnetokalorische Element in der Lage ist, eine hohe Fähigkeit als AMR-Zyklus zu haben.

14. Thermomagnetische Kreislaufvorrichtung umfassend:
ein magnetokalorisches Element (12), das in Abhängigkeit von der Stärke eines externen Magnetfelds Wärme abgibt oder absorbiert;
eine Magnetfeldmodulationsvorrichtung (13), die das an das magnetokalorische Element angelegte externe Magnetfeld moduliert;
eine Wärmetransportvorrichtung (14), die eine Zweiwege-Strömung eines Wärmetransportmediums erzeugt, die Wärme mit dem magnetokalorischen Element austauscht, so dass ein Hochtemperaturende und ein Niedrigtemperaturende in dem magnetokalorischen Element erzeugt werden, und **dadurch gekennzeichnet, dass** die thermomagnetische Kreislaufvorrichtung ferner umfasst:
einen Phasenregler (571, 572), der eine Phasendifferenz zwischen einer Magnetfeldphase, die eine Änderung des von der Magnetfeldmodulationsvorrichtung erzeugten externen Magnetfelds darstellt, und einer Strömungsphase der von der Wärmetransportvorrichtung erzeugten Zweiwege-Strömung einstellt, indem er eine relative Position zwischen der Magnetfeldmodulationsvorrichtung und dem magnetokalorischen Element verschiebt.

15. Thermomagnetische Kreislaufvorrichtung nach Anspruch 14, wobei der Phasenregler so konfiguriert ist, dass er das magnetokalorische Element bewegt.

## Revendications

1. Dispositif à cycle thermomagnétique comprenant :
un élément magnétocalorique (12) qui émet ou absorbe de la chaleur en fonction d'une intensité d'un champ magnétique externe ;
un dispositif de modulation de champ magnétique (13) qui module le champ magnétique externe appliqué à l'élément magnétocalorique ;
un dispositif de transport de chaleur (14) qui génère un écoulement bidirectionnel d'un milieu de transport de chaleur qui échange de la chaleur avec l'élément magnétocalorique de sorte qu'une extrémité à haute température et une extrémité à basse température soient générées dans l'élément magnétocalorique ;
un contrôleur de phase (71, 72, 571, 572) qui ajuste une différence de phase entre une phase de champ magnétique représentant une variation du champ magnétique externe généré par le dispositif de modulation de champ magnétique et une phase d'écoulement de l'écoulement bidirectionnel généré par le dispositif de transport de chaleur ; et
un dispositif de contrôle (18) qui contrôle le contrôleur de phase, dans lequel le dispositif de contrôle inclut
une partie d'acquisition de phase (18a, 918b, A18b) qui acquiert la phase d'écoulement (PHf) de l'écoulement bidirectionnel du milieu de transport de chaleur ou une phase de réaction (PHtr) représentant une variation de la chaleur émise ou absorbée par l'élément magnétocalorique, et **caractérisé en ce que** le dispositif à cycle thermomagnétique comprend en outre :
une partie de contrôle (18c, 918c) qui contrôle le contrôleur de phase sur la base de la phase d'écoulement ou de la phase de réaction,
dans lequel le contrôleur de phase est disposé entre le dispositif de modulation de champ magnétique et le dispositif de transport de chaleur, et contrôle la différence de phase dans une relation d'imbrication mécanique entre le dispositif de modulation de champ magnétique et le dispositif de transport de chaleur,
dans lequel le contrôleur de phase est configuré pour correspondre à une direction d'avance (ADV) et une direction de retard (RET), et possède un composant (73, 74) qui définit une pluralité de chambres de capacité (75, 76) dans lesquelles un fluide d'actionnement est agencé
et dans lequel la partie de contrôle contrôle la différence de phase par le contrôle d'un rapport de volume entre la pluralité de chambres de capacité.

2. Dispositif à cycle thermomagnétique comprenant :
un élément magnétocalorique (12) qui émet ou absorbe de la chaleur en fonction d'une intensité d'un champ magnétique externe ;
un dispositif de modulation de champ magnétique (13) qui module le champ magnétique externe appliqué à l'élément magnétocalorique ;
un dispositif de transport de chaleur (14) qui génère un écoulement bidirectionnel d'un milieu de transport de chaleur qui échange de la chaleur avec l'élément magnétocalorique de sorte qu'une extrémité à haute température et une extrémité à basse température soient générées dans l'élément magnétocalorique ;
un contrôleur de phase (71, 72, 571, 572) qui ajuste une différence de phase entre une phase de champ magnétique représentant une variation du champ magnétique externe généré par le dispositif de modulation de champ magnétique et une phase d'écoulement de l'écoulement bidirectionnel généré par le dispositif de transport de chaleur ; et
un dispositif de contrôle (18) qui contrôle le contrôleur de phase, dans lequel le dispositif de contrôle inclut
une partie d'acquisition de phase (18a, 918b, A18b) qui acquiert la phase d'écoulement (PHf) de l'écoulement bidirectionnel du milieu de transport de chaleur ou une phase de réaction (PHtr) représentant une variation de la chaleur émise ou absorbée par l'élément magnétocalorique, et **caractérisé en ce que** le dispositif à cycle thermomagnétique comprend en outre :
une partie de contrôle (18c, 918c) qui contrôle le contrôleur de phase sur la base de la phase d'écoulement ou de la phase de réaction,
dans lequel le contrôleur de phase est disposé entre le dispositif de modulation de champ magnétique et le dispositif de transport de chaleur, et contrôle la différence de phase dans une relation d'imbrication mécanique entre le dispositif de modulation de champ magnétique et le dispositif de transport de chaleur,
dans lequel le contrôleur de phase est configuré pour correspondre à une direction d'avance (ADV) et une direction de retard (RET), et possède un composant (73, 74) qui définit une pluralité de chambres de capacité (75, 76) dans lesquelles un fluide d'actionnement est agencé
et dans lequel la partie de contrôle contrôle la différence de phase par la fourniture d'une fonction d'amortissement au contrôleur de phase.

3. Dispositif à cycle thermomagnétique comprenant :
un élément magnétocalorique (12) qui émet ou absorbe de la chaleur en fonction d'une intensité d'un champ magnétique externe ;
un dispositif de modulation de champ magnétique (13) qui module le champ magnétique externe appliqué à l'élément magnétocalorique ;
un dispositif de transport de chaleur (14) qui génère un écoulement bidirectionnel d'un milieu de transport de chaleur qui échange de la chaleur avec l'élément magnétocalorique de sorte qu'une extrémité à haute température et une extrémité à basse température soient générées dans l'élément magnétocalorique ;
un contrôleur de phase (71, 72, 571, 572) qui ajuste une différence de phase entre une phase de champ magnétique représentant une variation du champ magnétique externe généré par le dispositif de modulation de champ magnétique et une phase d'écoulement de l'écoulement bidirectionnel généré par le dispositif de transport de chaleur ; et
un dispositif de contrôle (18) qui contrôle le contrôleur de phase, dans lequel le dispositif de contrôle inclut
une partie d'acquisition de phase (18a, 918b, A18b) qui acquiert la phase d'écoulement (PHf) de l'écoulement bidirectionnel du milieu de transport de chaleur ou une phase de réaction (PHtr) représentant une variation de la chaleur émise ou absorbée par l'élément magnétocalorique, et **caractérisé en ce que** le dispositif à cycle thermomagnétique comprend en outre :
une partie de contrôle (18c, 918c) qui contrôle le contrôleur de phase sur la base de la phase d'écoulement ou de la phase de réaction,
et dans lequel le contrôleur de phase (571, 572) décale une position relative entre le dispositif de modulation de champ magnétique et l'élément magnétocalorique.

4. Dispositif à cycle thermomagnétique selon l'une quelconque des revendications 1 à 3, dans lequel
le dispositif de contrôle comporte une partie d'acquisition de différence de phase (18b) qui acquiert une différence de phase entre la phase de champ magnétique et la phase d'écoulement,
la partie d'acquisition de phase (18a) acquiert la phase d'écoulement,
la partie de contrôle (18c) contrôle le contrôleur de phase de sorte qu'une différence de phase d'acquisition (PHr) acquise par la partie d'acquisition de différence de phase s'approche d'une différence de phase cible (PHt),
la différence de phase cible est une différence de phase de retard dont la phase d'écoulement est retardée par rapport à la phase de champ magnétique, et
la différence de phase d'acquisition est une différence de phase de retard qui est davantage retardée que la différence de phase cible.

5. Dispositif à cycle thermomagnétique selon la revendication 4, dans lequel
la partie de contrôle acquiert la différence de phase entre la phase de champ magnétique et la phase d'écoulement comme étant la différence de phase d'acquisition, et contrôle le contrôleur de phase pour réduire une différence de phase d'erreur (PHe) entre la différence de phase d'acquisition et la différence de phase cible.

6. Dispositif à cycle thermomagnétique selon la revendication 4 ou la revendication 5, dans lequel la partie de contrôle contrôle la différence de phase d'acquisition au sein une plage cible (PHp) incluant la différence de phase cible.

7. Dispositif à cycle thermomagnétique selon la revendication 2, comprenant en outre : un élément de fourniture de bulles d'air (379, 479) qui fournit la fonction d'amortissement par l'injection de bulles d'air dans la chambre de capacité, dans lequel
la partie de contrôle contrôle la différence de phase par le contrôle de l'élément de fourniture de bulles d'air.

8. Dispositif à cycle thermomagnétique selon la revendication 7, dans lequel
le fluide d'actionnement possède une solubilité des gaz connue, et
l'élément de fourniture de bulles d'air possède un thermorégulateur qui contrôle une température du fluide d'actionnement pour injecter des bulles d'air dans la chambre de capacité.

9. Dispositif à cycle thermomagnétique selon la revendication 3, dans lequel
le contrôleur de phase est configuré pour déplacer l'élément magnétocalorique.

10. Dispositif à cycle thermomagnétique selon l'une quelconque des revendications 1 à 9, dans lequel
la partie d'acquisition de phase inclut une partie d'acquisition de phase d'écoulement (18a) qui acquiert la phase d'écoulement de l'écoulement bidirectionnel du milieu de transport de chaleur,
la partie d'acquisition de phase inclut en outre une partie de détermination de phase (18b) qui acquiert la différence de phase entre la phase de champ magnétique et la phase d'écoulement comme étant une différence de phase d'acquisition, et
la partie de contrôle (18c) contrôle le contrôleur de phase de sorte que la différence de phase d'acquisition (PHr) s'approche d'une différence de phase cible (PHt).

11. Dispositif à cycle thermomagnétique selon la revendication 10, comprenant en outre : un capteur de débit (31, 32, 531) qui observe l'écoulement bidirectionnel du milieu de transport de chaleur, dans lequel
la partie d'acquisition de phase d'écoulement détecte la phase d'écoulement sur la base d'une sortie du capteur d'écoulement.

12. Dispositif à cycle thermomagnétique selon la revendication 10 comprenant en outre : un capteur (35, 36) qui observe un état du milieu de transport de chaleur, dans lequel la partie d'acquisition de phase d'écoulement estime la phase d'écoulement sur la base d'une sortie du capteur.

13. Dispositif à cycle thermomagnétique selon l'une quelconque des revendications 1 à 12, dans lequel le contrôleur de phase contrôle la différence de phase de sorte que l'élément magnétocalorique soit apte à posséder une capacité élevée en tant que cycle AMR.

14. Dispositif à cycle thermomagnétique comprenant :
un élément magnétocalorique (12) qui émet ou absorbe de la chaleur en fonction d'une intensité d'un champ magnétique externe ;
un dispositif de modulation de champ magnétique (13) qui module le champ magnétique externe appliqué à l'élément magnétocalorique ;
un dispositif de transport de chaleur (14) qui génère un écoulement bidirectionnel d'un milieu de transport de chaleur qui échange de la chaleur avec l'élément magnétocalorique de sorte qu'une extrémité à haute température et une extrémité à basse température soient générées dans l'élément magnétocalorique ; et **caractérisé en ce que** le dispositif à cycle thermomagnétique comprend en outre :
un contrôleur de phase (571, 572) qui ajuste une différence de phase entre une phase de champ magnétique représentant une variation du champ magnétique externe généré par le dispositif de modulation de champ magnétique et une phase d'écoulement de l'écoulement bidirectionnel généré par le dispositif de transport de chaleur par le décalage d'une position relative entre le dispositif de modulation de champ magnétique et l'élément magnétocalorique.

15. Dispositif à cycle thermomagnétique selon la revendication 14, dans lequel
le contrôleur de phase est configuré pour déplacer l'élément magnétocalorique.
